(19) 

**Europäisches Patentamt**

**European Patent Office**

**Office européen des brevets**

(11) **EP 3 728 334 B1**

(12) **FASCICULE DE BREVET EUROPEEN**

(45) Date de publication et mention
de la délivrance du brevet:
**01.11.2023 Bulletin 2023/44**

(21) Numéro de dépôt: **18842542.5**

(22) Date de dépôt: **20.12.2018**

(51) Classification Internationale des Brevets (IPC):
**C08B 30/12** *(2006.01)* **C08L 3/02** *(2006.01)*
**A23L 29/212** *(2016.01)*

(52) Classification Coopérative des Brevets (CPC):
**C08B 30/12; A23L 29/212; C08L 3/02**

(86) Numéro de dépôt international:
**PCT/FR2018/053456**

(87) Numéro de publication internationale:
**WO 2019/122749 (27.06.2019 Gazette 2019/26)**

(54) **PROCÉDÉ DE PRÉPARATION D'UN AMIDON THERMIQUEMENT MODIFIÉ**

VERFAHREN ZUR HERSTELLUNG EINER WÄRMEMODIFIZIERTEN STÄRKE

METHOD OF PREPARING A HEAT-MODIFIED STARCH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2017 FR 1762645
26.02.2018 FR 1851658
19.04.2018 FR 1853466
30.11.2018 FR 1872125**

(43) Date de publication de la demande:
**28.10.2020 Bulletin 2020/44**

(73) Titulaire: **ROQUETTE FRERES
62136 Lestrem (FR)**

(72) Inventeurs:
• **BOCK, Solène
59130 Lambersart (FR)**

• **QUETTIER, Claude
59130 Lambersart (FR)**
• **WIATZ, Vincent
59840 Premesques (FR)**

(74) Mandataire: **Plasseraud IP
66, rue de la Chaussée d'Antin
75440 Paris Cedex 09 (FR)**

(56) Documents cités:
**WO-A1-2014/042537 US-A- 5 846 786**

Remarques:
Le dossier contient des informations techniques
présentées postérieurement au dépôt de la demande
et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention se rapporte à la production d'amidon thermiquement modifié, amidon dont la viscosité est stabilisée suite à ce traitement thermique. De tels amidons thermiquement modifiés trouvent alors une utilisation comme agents texturants et épaississants dans de nombreuses applications alimentaires, notamment dans les soupes, sauces, dans les desserts comme les yaourts, les laits fermentés brassés, yaourts thermisés, les crèmes dessert, mais aussi les boissons, les plats préparés, les préparations à base de viande ou de poisson, tel que le surimi.

## Contexte de l'invention

Synthétisé par voie biochimique, source d'hydrates de carbone, l'amidon est l'une des matières organiques les plus répandues du monde végétal, où il constitue la réserve nutritionnelle des organismes.
Depuis toujours, les amidons sont utilisés dans l'industrie alimentaire, non seulement comme ingrédient nutritif mais également pour leurs propriétés technologiques, comme agent épaississant, liant, stabilisant ou gélifiant.
Par exemple, les amidons natifs sont utilisés dans les préparations nécessitant une cuisson. L'amidon de maïs, notamment, est la base des « poudres à flan ».
Comme il est riche en amylose, il rétrograde et donc gélifie fortement. Il permet d'obtenir des flans fermes après cuissons et refroidissement.
Il convient également pour les crèmes pâtissières.
Mais celles-ci ne peuvent pas entrer dans les pâtisseries destinées à être congelées car, à la décongélation, le phénomène de synérèse, qui se traduit par une expulsion d'eau, détruit la texture de la crème.
Ainsi, à l'état natif, l'amidon est d'application limitée en raison de la synérèse, mais également en raison de :

- sa faible résistance aux contraintes de cisaillement et aux traitements thermiques,
- sa faible processabilité et
- sa faible solubilité dans des solvants organiques communs.

De ce fait, pour répondre aux besoins technologiques exigeants d'aujourd'hui, les propriétés de l'amidon doivent être optimisées par diverses méthodes dites de « modification ».
Ces principales modifications visent alors à adapter l'amidon aux contraintes technologiques résultant de la cuisson, mais aussi de la congélation/décongélation, de l'appertisation ou de la stérilisation, et à le rendre compatible avec une alimentation moderne (micro-ondes, préparations instantanées, "hautes températures"...).
La modification de l'amidon vise alors à corriger un ou certains des défauts mentionnés ci-avant, améliorer ainsi sa polyvalence et satisfaire la demande des consommateurs.
Les techniques de modification de l'amidon ont été globalement classées en quatre catégories : physiques, chimiques, enzymatiques et génétiques, la finalité étant de produire divers dérivés avec des propriétés physicochimiques optimisées.
Les modifications chimiques et physiques sont celles le plus souvent mises en oeuvre.
Le traitement chimique consiste à introduire des groupes fonctionnels dans l'amidon, ce qui altère remarquablement ses propriétés physico-chimiques. De telles modifications des amidons natifs granulaires altèrent en effet profondément le comportement en gélatinisation, collage et rétrogradation.
Généralement, ces modifications sont réalisées par dérivatisation chimique, comme l'estérification, l'éthérification, la réticulation ou le greffage
Cependant, les modifications chimiques sont moins recherchées par le consommateur dans les applications alimentaires (également pour des raisons d'environnement), même si certaines modifications sont considérées comme sûres.
Des modifications physiques variées sont de ce fait proposées, par exemple :

- le traitement par la chaleur humide (terme anglosaxon de « Heat Moisture Treatment » ou HMT), consistant à traiter l'amidon à des niveaux d'humidité contrôlée (22-27 %) et à haute température, pendant 16 heures, afin d'altérer la structure et les propriétés physicochimiques de l'amidon ;

- la « recuite » (terme anglosaxon d' « annealing »), consistant à traiter l'amidon en excès d'eau, à des températures en-deçà de la température de gélatinisation, afin d'approcher la température de transition vitreuse ;

- le traitement à ultra haute pression (terme anglosaxon de « High Pressure Processing » ou HPP), par lequel on hydrate les régions amorphes du granule d'amidon, ce qui conduit à une distorsion des parties cristallines du granule et favorise l'accessibilité desdites régions cristallines à l'eau ;

- le traitement au plasma de décharge luminescente, qui génère, à température ambiante, des électrons à haute énergie et d'autres espèces hautement actives. Appliqués à l'amidon, ces espèces actives excitent les groupes chimiques de l'amidon et provoquent une réticulation importante des macromolécules ;

- le traitement de pression osmotique (d'acronyme anglosaxon « OPT »), réalisé en présence de solutions à haute teneur en sels. L'amidon est suspendu dans du sulfate de sodium afin de produire une suspension uniforme. L'amidon passe du type B au type A après traitement, en acquérant ainsi une température de gélatinisation qui augmente de manière significative ;

- le traitement par « inhibition thermique ». En toute généralité, l'inhibition thermique s'entend de la déshydratation d'un amidon jusqu'à atteindre l'état anhydre ou substantiellement anhydre (i.e. < 1 % d'humidité), puis un traitement thermique à plus de 100°C pendant une période de temps suffisante pour « inhiber » l'amidon, en l'occurrence ici pour lui conférer des propriétés d'amidons réticulés. Il est par ailleurs nécessaire de placer l'amidon dans des conditions de pH au moins neutre à préférentiellement alcalin avant de procéder à l'étape de déshydratation poussée.

Une alternative de traitement par « inhibition thermique » a été proposée en phase solvant, qui consiste à chauffer un amidon granulaire non prégélatinisé en milieu alcoolique, en présence d'une base et de sels, à une température de 120° à 200°C, pendant 5 minutes à 2 heures.

Quoi qu'il en soit, le processus d'inhibition thermique conduit alors à obtenir une pâte d'amidon présentant des propriétés de résistance accrue à la rupture de viscosité, et une texture non cohésive.

Le domaine technique auquel se rattache l'invention est celui du traitement par inhibition thermique de l'amidon, sans solvant hydro-alcoolique.

Dans ce domaine technique particulier, on peut citer plus particulièrement l'US 6.221.420 qui décrit un amidon thermiquement inhibé, obtenu par déshydratation puis traitement thermique.

Les principales étapes sont :

- la déshydratation de l'amidon à une teneur en eau inférieure à 1% réalisée à une température comprise entre 100 et 125°C, puis
- le traitement thermique de l'amidon sec ainsi obtenu, à environ 140°C, dans un lit fluidisé réactionnel, pendant une durée de l'ordre de 20 heures.

De manière préférentielle, avant l'étape de déshydratation de l'amidon, il est recommandé de procéder à une étape d'alcalinisation de l'amidon, permettant de porter le pH de la suspension d'amidon à une valeur comprise entre 7 et 10, de préférence comprise entre 8 et 10.

A ce stade, avant l'étape de déshydratation proprement dite qui précède l'étape d'inhibition, la teneur en eau de l'amidon (telle qu'exemplifiée) est alors comprise entre 8 et 10%.

L'US 2001/0017133 décrit un procédé similaire, dans lequel l'amidon est également déshydraté en dessous de 125°C avant que le processus d'inhibition ne soit démarré (à une température de plus de 100°C, préférentiellement compris entre 120 et 180°C, plus préférentiellement comprise entre 140 et 160°C) pendant une durée jusqu'à 20 heures, préférentiellement comprise entre 3 heures 30 et 4 heures 30.

Avant l'étape de déshydratation, l'étape d'alcalinisation classique conduit à une suspension d'amidon présentant une valeur de pH comprise entre 7,5 et 11,2, de préférence comprise entre 8 et 9,5%, et une teneur en eau compris entre 2 et 15 %.

Une variante a été proposé dans la demande de brevet WO 2014/042537, variante qui porte sur un chauffage d'un amidon alcalin à des températures comprises entre 140 et 190°C, en veillant à ce que le procédé d'inhibition soit initié et conduit en présence d'eau en quantité suffisante, soit plus de 1% d'eau.

En d'autres termes, ce procédé recommande d'inhiber thermiquement un amidon préalablement alcalinisé sans procéder à une étape de déshydratation.

La préparation d'amidon ou l'amidon est ainsi amenée à un pH compris entre 9,1 et 11,2, préférentiellement à une valeur de l'ordre de 10, et l'humidité est ajustée entre 2 et 22 %, préférentiellement entre 5 et 10%.

L'inhibition thermique est réalisée ensuite directement sur cette poudre ou cet amidon, à une température comprise entre 140 et 190°C, préférentiellement entre 140 et 180°C, pendant une durée de 30 minutes.

De tout ce qui précède, on constate que les procédés d'inhibition thermique mis en oeuvre pour stabiliser la viscosité des amidons mettent en jeu des procédés nécessitent

- la mise en oeuvre de longues durées de traitement, i.e. jusqu'à 20 heures, et
- le contrôle de la teneur en eau des amidons à traiter, en fonction des procédés proposés dans l'état de l'art, que ce soit à des valeurs de moins de 1 % ou au contraire entre 2 et 22%.

Il demeure donc un besoin de disposer d'un procédé original d'inhibition de l'amidon, permettant de réduire encore le temps de réaction, et sans qu'il ne soit nécessaire de contrôler la teneur en eau de l'amidon à « inhiber thermiquement ».

## Description de l'invention

Ainsi, l'invention concerne un procédé de production d'un amidon thermiquement modifié à partir d'un lait d'amidon comprenant les étapes consistant à :

(i) préparer un lait d'amidon présentant une matière sèche comprise entre 30 et 40 %, de préférence entre 35 et 37 % en poids,
(ii) ajouter un agent alcalin en poudre de manière à obtenir une conductivité finale comprise entre 0,7 et 2,5 mS/cm,
(iii) assurer un temps de contact compris entre 0,5 et 5 heures,
(iv) filtrer et sécher le lait d'amidon,
(v) chauffer ledit amidon séché de manière à le porter à une température de plus de 180°C pendant un temps de séjour compris entre 8 et 50 minutes, de préférence entre 10 et 40 minutes, plus préférentiellement encore entre 12 et 35 minutes.

L'amidon à utiliser dans le procédé de l'invention peut être de toute origine, par exemple le maïs, le maïs waxy, l'amylomaïs, le blé, le blé waxy, le pois, la pomme de terre, la pomme de terre waxy, le tapioca, le tapioca waxy, le riz, le konjac, etc.

De manière préférentielle, on choisira de l'amidon de maïs, plus particulièrement de l'amidon de maïs waxy (à haute teneur en amylopectine), la fécule de pomme de terre, le manioc et le pois, comme il sera exemplifié ci-après.

L'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et hydroxyde de potassium pris seul ou en combinaison, plus préférentiellement encore le carbonate de sodium.

Le procédé conforme à l'invention demande tout d'abord la préparation d'un lait d'amidon à une matière sèche comprise entre 30 et 40 %, de préférence entre 35 et 37 % en poids. Comme il sera exemplifié ci-après, la matière sèche est fixée à 36,5 % en poids.

L'étape suivante consiste alors à contrôler l'imprégnation alcaline de l'amidon en ajoutant l'agent alcalin sous forme poudre pour obtenir une conductivité finale sur la poudre remise en suspension à 20 % de matière sèche, comprise entre 0,7 et 2,5 mS/cm.

Il est assuré ensuite un temps de contact compris entre 0,5 et 5 heures.

La société Demanderesse a en effet trouvé que :

- l'ajout de l'agent alcalin, plus particulièrement le carbonate de sodium directement en phase lait permet d'atteindre plus efficacement les hautes valeurs de pH recherchées (sont entre 10,2 et 10,8, de préférence comprises entre 10,5 et 10,65) qu'une pulvérisation de carbonate de sodium sur l'amidon en phase sèche, au sens où l'ajout en phase lait permet une meilleure migration du carbonate à l'intérieur des granules d'amidon en comparaison à une imprégnation en poudre.

Par ailleurs, comme l'imprégnation en phase poudre nécessite d'ajuster l'humidité de l'amidon à des valeurs élevées, une partie de l'énergie dédiée au traitement du produit sera donc perdue pour assurer l'évaporation de l'eau résiduelle.

- le contrôle du niveau d'imprégnation de l'amidon via des mesures de conductivité permet d'atteindre la précision requise pour lesdites hautes valeurs de pH.

La dernière étape consiste à chauffer l'amidon sec ainsi obtenu de manière à le porter à une température de plus de 180°C pendant un temps de séjour compris entre 8 et 50 minutes, de préférence entre 10 et 40 minutes, plus préférentiellement encore entre 12 et 35 minutes.

La société Demanderesse a noté que la durée du temps de séjour pouvait être ajustée en fonction de la nature de l'amidon choisi.

Ainsi, comme il sera notamment exemplifié ci-après le traitement d'amidon de maïs waxy nécessite des temps de séjour de 15 minutes à 20 minutes, jusqu'à 30, voire 35 minutes, tandis que le traitement de l'amidon de pois ne prend que de 10 à 25 minutes.

Ce traitement sera réalisé de manière avantageuse, comme il sera exemplifié ci-après, dans des dispositifs de traitement thermique combinant les échanges de chaleur par conduction et par convection, dispositif de type turbosécheur, par exemple au moins un turbosécheur continu de type VOMM, qui permet ainsi, en fonction de la taille dudit VOMM, d'atteindre un temps de réaction très court, de l'ordre de quelques minutes, soit moins de 5 minutes par étage de traitement thermique.

Les consignes de température sont alors fixées à des valeurs de plus de 190°C, de préférence comprise entre 195 et 240 °C, et le delta T, défini comme la différence de température entre la température de consigne et la température du produit en sortie du réacteur, soit compris entre 15 et 25 °C.

Les amidons thermiquement modifiés selon l'invention seront avantageusement utilisés, en fonction de leurs propriétés respectives, en tant qu'agent épaississant ou agent texturent dans des applications alimentaires, notamment dans les soupes, sauces, boissons et plats préparés et dans les desserts comme les yaourts et laits fermentés brassés et les yaourts thermisés.

Par leurs propriétés texturantes et gélifiantes, ils trouveront également de nombreuses applications dans les domaines aussi variés que :

- sauces et soupes acides (pasteurisées et stérilisées),
- sauces pour pâtes au jus de viande,
- desserts comme les yaourts, les laits fermentés brassés, les yaourts thermisés, les crèmes dessert,
- mayonnaise et vinaigrette à chaud,
- garniture de tarte, fruit ou garniture de viande ou de viande stable et sucrée ou salée, dîners (plats cuisinés courte durée de conservation),
- pudding (mélange sec à cuire),
- pots de bébé / préparations pour nourrissons,
- boissons,
- plats préparés, les préparations à base de viande ou de poisson, tel que le surimi.
- aliments pour animaux

L'invention sera mieux comprise à l'aide des exemples qui suivent, lesquels se veulent illustratifs et non limitatifs.

### Matériel et méthodes

#### Mesure de la conductivité

La méthode mise en oeuvre ici est adaptée de la Pharmacopée Européenne - édition officielle en vigueur - Conductivité (§ 2.2.38).

#### Matériels :

Conductivimètre électronique KNICK 703 équipé également de sa cellule de mesure et vérifié selon le mode opératoire décrit dans le manuel d'instructions qui s'y rapporte.

#### Mode opératoire :

On prépare une solution contenant 20 g d'échantillon et 80 g d'eau distillée présentant une résistivité supérieure à 500 000 ohms.cm.

On effectue la mesure, à 20 °C, à l'aide du conductivimètre en se reportant au mode opératoire indiqué dans le manuel d'utilisation de l'appareil.

Les valeurs sont exprimées en microSiemens/cm ($\mu$S/cm).

#### Mesure de la viscosité d'une suspension d'amidon à l'aide du Rapid Viscosimeter Analyser (RVA)

Cette mesure est réalisée à pH acide (entre 2,5 et 3,5) dans des conditions de concentration déterminées et suivant un profil d'analyse température/temps adapté.

Deux solutions tampons sont préparées :

#### Tampon A

Dans un bécher de 1 litre, contenant 500 ml d'eau déminéralisée, on ajoute

∘ 91,0 g d'acide citrique monohydrate (pureté > 99,5 %) et homogénéise,
∘ 33,0 g de chlorure de sodium (pureté > 99,5 %), et homogénéise jusqu'à dissolution complète,
∘ 300,0 g de soude 1N.

On transvase dans une fiole jaugée de 1 L et complète avec de l'eau déminéralisé à 1 L.

*Tampon B*
On mélange 100 g de Tampon A avec 334 ,0 g d'eau déminéralisée.

On prépare le produit à analyser de la manière suivante :
Une masse de 1,37 g du produit sec à analyser ainsi obtenu est introduite directement dans le bol du viscosimètre, et on introduit de la solution Tampon B jusqu'à l'obtention d'une masse égale à 28,00 ± 0,01 g. On homogénéise à la pale d'agitation du Rapid Visco Analyser (RVA-NewPort Scientific).
Le profil d'analyse temps/ température et vitesse dans le RVA est alors réalisé comme suit :

| Temps hh:mm:ss | Température °C | Vitesse de rotation Tour/min (RPM) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |

| | |
|---|---|
| Fin de test | : 00:20:05 (hh:mm:ss) |
| Température initiale | : 50°C ± 0,5°C |
| Intervalle d'acquisition des données | : 2 secondes |
| Sensibilité | : basse (low) |

Les résultats des mesures sont donnés en RVU (unité utilisée pour exprimer la viscosité obtenue sur le RVA), sachant que 1 unité RVU = 12 cPoises (cP).
Pour rappel, 1 cP = 1 mPa.s.
Les résultats seront donc présentés en mPa.s.
Les mesures seront de viscosité réalisées « au pic », i.e. valeur de viscosité maximale entre 4 et 6 minutes, et « à la chute », i.e. la différence entre la valeur de la viscosité au pic et celle mesurée à 17 minutes.

**Exemple 1** : **préparation d'amidons thermiquement modifiés « A ».**

1) L'alcalinisation de l'amidon de maïs waxy est conduite selon les étapes suivantes :

- Préparer une suspension d'amidon à 36.5% de matière sèche (MS) ;
- Ajouter du carbonate de sodium en poudre pour obtenir une conductivité finale sur la poudre remise en suspension à 20% MS entre 1,75 et 2 mS/cm;
- Assurer un temps de contact de 5h ;
- Filtrer et sécher à une humidité d'équilibre de l'amidon entre 10-14%

2) Traitement thermique

Le produit ainsi obtenu est traité thermiquement dans des turboréacteurs continus de type VOMM en série, dont la température de consigne est fixée à 200°C et configurés pour faire subir au produit un temps de séjour de 20 min, et de manière à ce que la différence de température entre la consigne et la température du produit en sortie du réacteur, qu'on appelle Delta T, soit d'une valeur de l'ordre de 16 à 17°C.

Paramètres de process

| Exp | Conductivité sur produit après imprégnation remis à 20%MS en mS/cm | Humidité du produit avant traitement thermique | Delta T | T°C consigne | Temps de séjour min |
|-----|-----|-----|-----|-----|-----|
| A-1 | 2 | 11.6 | 17 | 200 | 20 |
| A-2 | 1.75 | 10.1 | 16 | 200 | 20 |

Les mesures de viscosité RVA sont réalisées et sont présentée dans le tableau ci-dessous.

Résultats

| Exp | RVA Pic (mPa.s) | RVA Chute (mPa.s) |
|-----|-----|-----|
| Base maïs waxy | 1020 | 914 |
| A-1 | 577 | 63 |
| A-2 | 627 | 52 |

**Exemple 2 : préparation d'amidons thermiquement modifiés « B ».**

1) L'alcalinisation de l'amidon de maïs waxy est conduite selon les étapes suivantes :

- Préparer une suspension d'amidon à 36.5% de matière sèche (MS) ;

- Ajouter du carbonate de sodium en poudre pour obtenir une conductivité finale sur la poudre remise en suspension à 20% MS de 1,2 et 1,32 mS/cm ;

- Assurer un temps de contact de 1h ;

- Filtrer et sécher à une humidité d'équilibre de l'amidon entre 10-14%.

2) Traitement thermique

Le produit ainsi obtenu est traité thermiquement dans des turboréacteurs continus de type VOMM en série, dont la température de consigne est fixée à 210°C et configurés pour faire subir au produit un temps de séjour entre 15 et 20 min, et de manière à ce que la différence de température entre la consigne et la température du produit en sortie du réacteur, qu'on appelle Delta T, soit d'une valeur de l'ordre de 21 à 23°C.

Paramètres de process

| Exp. | Conductivité sur produit après imprégnation remis à 20%MS en mS/cm | Humidité du produit avant traitement thermique en % | Delta T | T°C consigne | Temps de séjour (min) |
|---|---|---|---|---|---|
| Base maïs waxy | 0.03 | 12 | 0 | 0 | 0 |
| B-1 | 1.2 | 11 | 21 | 210 | 20 |
| B-2 | 1.32 | 10 | 23 | 210 | 15 |

Les mesures de viscosité RVA sont réalisées et sont présentée dans le tableau ci-dessous.

Résultats

| Essais | RVA Pic (mPa.s) | RVA Chute (mPa.s) |
|---|---|---|
| Base maïs waxy | 1020 | 914 |
| B-1 | 606 | -2 |
| B-2 | 682 | 69 |

**Exemple 3 : préparation d'amidons thermiquement modifiés « C ».**

3) L'alcalinisation de l'amidon de maïs waxy est conduite selon les étapes suivantes :

- Préparer une suspension d'amidon à 36.5% de matière sèche (MS) ;

- Ajouter du carbonate de sodium en poudre pour obtenir une conductivité finale sur la poudre remise en suspension à 20% MS de 1,4 mS/cm ou 1,6 mS/cm;

- Assurer un temps de contact de 1h ;

- Filtrer et sécher à une humidité d'équilibre de l'amidon entre 10-14%.

4) Traitement thermique

Le produit ainsi obtenu est traité thermiquement dans des turboréacteurs continus de type VOMM en série, dont la température de consigne est fixée à 210°C et configurés pour faire subir au produit un temps de séjour entre 25 et 30 min, et de manière à ce que la différence de température entre la consigne et la température du produit en sortie du réacteur, qu'on appelle Delta T, soit d'une valeur de l'ordre de 22°C.

Paramètres de process

| Exp. | Conductivité sur produit après imprégnation remis à 20%MS en mS/cm | Humidité du produit avant traitement thermique en % | Delta T | T°C consigne | Temps de séjour (min) |
|---|---|---|---|---|---|
| Base maïs waxy | 0.03 | 12 | 0 | 0 | 0 |
| C-1 | 1,4 | 10,7 | 22 | 210 | 25 |
| C-2 | 1,4 | 10,7 | 22 | 210 | 30 |

(suite)

| Exp. | Conductivité sur produit après imprégnation remis à 20%MS en mS/cm | Humidité du produit avant traitement thermique en % | Delta T | T°C consigne | Temps de séjour (min) |
|---|---|---|---|---|---|
| C-3 | 1,6 | 10,4 | 22 | 200 | 30 |

Les mesures de viscosité RVA sont réalisées et sont présentée dans le tableau ci-dessous.

Résultats

| Essais | RVA Pic (mPa.s) | RVA Chute (mPa.s) |
|---|---|---|
| Base maïs waxy | 1020 | 914 |
| C-1 | 409 | -116 |
| C-2 | 358 | -130 |
| C-3 | 282 | -94 |

**Exemple 4 : préparation d'amidons thermiquement modifiés « D ».**

L'alcalinisation de l'amidon de maïs waxy est conduite selon les étapes suivantes :

- Préparer une suspension d'amidon à 36.5% de matière sèche (MS) ;

- Ajouter du carbonate de sodium en poudre pour obtenir une conductivité finale sur la poudre remise en suspension à 20% MS de 1,4 mS/cm ;

- Assurer un temps de contact de 1h ;

- Filtrer et sécher à une humidité d'équilibre de l'amidon entre 10-14%.

5) Traitement thermique

Le produit ainsi obtenu est traité thermiquement dans des turboréacteurs continus de type VOMM en série, dont la température de consigne est fixée à 210°C et configurés pour faire subir au produit un temps de séjour de 35 min, et de manière à ce que la différence de température entre la consigne et la température du produit en sortie du réacteur, qu'on appelle Delta T, soit d'une valeur de l'ordre de 22°C.

Paramètres de process

| Exp. | Conductivité sur produit après imprégnation remis à 20%MS en mS/cm | Humidité du produit avant traitement thermique en % | Delta T | T°C consigne | Temps de séjour (min) |
|---|---|---|---|---|---|
| Base maïs waxy | 0,03 | 12 | 0 | 0 | 0 |
| D | 1,4 | 10,7 | 22 | 210 | 35 |

Les mesures de viscosité RVA sont réalisées et sont présentée dans le tableau ci-dessous.

Résultats

| Essais | RVA Pic (mPa.s) | RVA Chute (mPa.s) |
|---|---|---|
| Base maïs waxy | 1020 | 914 |
| D | 274 | -182 |

En conclusion de ces 4 premiers exemples :

Chaque famille d'amidons thermiquement modifiés selon l'invention présente une stabilité améliorée durant le process d'utilisation par rapport à l'amidon natif : moins de phénomènes de prise en viscosité et de rétrogradation sont observés lors de l'utilisation de ces amidons.

Sur ce dernier point, on constate en effet que plus la chute RVA tend vers 0 ou devient négative, plus le produit sera fonctionnalisé et moins il exprimera de rétrogradation.

**Conclusion finale pour les résultats de ces 4 premiers exemples**

Les amidons thermiquement modifiés de la famille « D » représentent les produits les plus résistants aux cisaillements, à l'acidité des milieux et aux traitements thermiques.

Les amidons thermiquement modifiés de la famille « C » sont un peu moins résistants que les amidons thermiquement modifiés de la famille « D », les amidons thermiquement modifiés de la famille « B » le sont un peu moins que les amidons thermiquement modifiés de la famille « C » et les amidons thermiquement modifiés de la famille « A » moins que Les amidons thermiquement modifiés de la famille « B ».

Le choix de l'utilisation de ces amidons se fera donc en fonction de l'application visée et donc des conditions de cisaillement, d'acidité et de température de mise en oeuvre, comme il sera démontré ci-après dans les exemples de réalisation.

**Exemple 5 : Etude comparative**

Une analyse est réalisée comparant les produits selon l'invention avec des produits du commerce de même catégorie, selon le protocole suivant :

- Remise en suspension de l'amidon à 36,5 % de matière sèche.
- Neutralisation par de l'acide chlorhydrique à 20% à pH 5.5 +/- 1
- Filtration, Lavage afin d'obtenir une conductivité inférieure à 500 µS, Séchage à l'humidité classique de l'amidon entre 10 et 14%

| Exp | Humidité % | pH à 20%MS | Conductivité à 20%MS | RVA Chute (mPa.s) | RVA Pic (mPa.s) |
|---|---|---|---|---|---|
| C-1 | 11 | 6.5 | 70 | -94 | 372 |
| C-2 | 14 | 6.42 | 115 | -101 | 383 |
| D | 11 | 6.28 | 55 | -159 | 251 |
| B-1 | 10.7 | 5.73 | 130 | 8 | 564 |
| B-2 | 10.5 | 5.75 | 90 | 89 | 645 |
| A-1 | 12.3 | 6.1 | 279 | 147 | 562 |
| A-2 | 12 | 5.1 | 110 | 175 | 586 |
| NOVATION® 2300 | 12.8 | 5.7 | 164 | -186 | 276 |
| NOVATION® 2600 | 12.3 | 5.5 | 113 | 30 | 603 |
| CLARIA® PLUS | 12.5 | 5.7 | 114 | -132 | 399 |

--> 15-20 min pour obtenir un composé équivalent au NOVATION® 2600
--> 20-30 min obtenir un composé équivalent au CLARIA® PLUS
--> 25-35 min obtenir un composé équivalent au NOVATION® 2300
--> Produit moins fonctionnalisé

Dépendant des autres paramètres de process tel que le Delta T et la dose de carbonate.

**Exemple 6 : Mise en œuvre des amidons thermiquement modifiés « D » dans de la sauce tomate - *Ketchup***

*L'analyse est réalisée sur la base de la recette témoin suivante :*

| Ingrédients | Quantité (%) |
|---|---|
| *Pré-mélange à la tomate à 14,9 ° de brix* | |
| Eau | 23,0 |
| Concentré de tomate à 28 % | 26,0 |
| *Pré-mélange d'amidon* | |
| Eau | 5,0 |
| Amidon testé | 3,2 |
| sel | 2,0 |
| *Pré-mélange vinaigre* | |
| Vinaigre 8° | 8,8 |
| *Pré-mélange sirop de sucres à 53,1 ° de Brix* | |
| Eau | 17,0 |
| Saccharose | 15,0 |
| | |
| *Total* | 100 |

*Le procédé de préparation de la sauce tomate - Ketchup est le suivant :*

Pour un lot de 1,5 kg :

1. Etape de cuisson sur cuiseur Hotmix Pro Combi de 2 L :

Consignes : 100°C, 30 minutes, vitesse 1

   a. Mélanger la pré-mélange à la tomate sur vitesse 1 - 120 rpm - 1 minute
   b. Ajout des pré-mélanges amidon et sel
   c. Cuisson 100°C, 30 minutes, à vitesse 1

Consignes : 100°C, vitesse 2
d. Ajout du pré-mélange de vinaigre et sirop de saccharose à 100°C, vitesse 2 jusqu'à atteindre une température de 92°C

2. Emballage / conditionnement
Remplissage de flacons en verre de 375 ml à une température de 60-65°C.
3. Pasteurisation
Autoclave 85°C pendant 8 minutes (équipement: STERIFLOW rotary bi-process Ø 900 mm - 1 panier - *Réf : NS 911 R MP FLW STEAM, année 2017, www.steriflow.comlen ;* Rotation: non (statique) - traitement thermique par pasteurisation avec cascade d'eau)

Au final, la recette est caractérisée par :

- Contenu total en eau : 43 %
- pH : 3,66
- Brix : 29,5]

*Les différents amidons testés sont les suivants :*

- Amidon modifié thermiquement « D » selon l'invention (préparé selon l'exemple 4)
- CLEARAM® CH2020 commercialisé par la société Demanderesse (amidon de maïs waxy réticulé adipate acétylé)
- NOVATION® 2300 commercialisé par la société INGREDION
- CLARIA®+ commercialisé par la société TATE & LYLE

*L'évaluation des différentes sauces tomates est réalisée par les mesures suivantes :*

1. Niveau de cuisson de l'amidon

Le niveau de cuisson est déterminé par microscopie optique (microscope LEICA - lentille x 20 et amplification x 150). L'échantillon est dispersé dans de l'eau déminéralisée, puis coloré au lugol dans le but de mettre en évidence les granules d'amidon. L'iode réagit avec l'amylose et forme des complexes de structure en spirale. Une couleur bleu / violet résulte si l'amidon est riche en amylose. Sinon, la couleur des granules d'amidon reste brun / jaune.
Les observations en microscopie optique fournissent différentes informations:

→ vérifier la présence et l'apparence des granules d'amidon. Ils peuvent être présents comme « non cuits » ; « Faiblement cuits » ; « Moyennement cuits » ; « Bien cuits »; « Fragmentés » ; ou « solubilisés (absents) ».
→ L'observation sous lumière polarisée révélera ou non la croix de biréfringence du granulé d'amidon non cuit (ce qui permet de contrôler la cuisson effective ou non de l'amidon).

2. Caractérisation sensorielle

Les caractérisations sensorielles sont des appréciations subjectives et les commentaires en termes de visuel et de texture (avec cuillère et / ou en bouche), ont été émises par un panel de 5 personnes entrainées. Elles permettent surtout ici d'appréhender les qualités des produits fabriqués et ne sont produites ici qu'à titre illustratif.

3. Viscosité

Les mesures sont réalisées sur rhéomètre rotatif DV1 BROOKFIELD,
En général, la rhéologie des produits alimentaires est caractérisée par un comportement non newtonien: la viscosité change en fonction du niveau de cisaillement appliqué.
Est utilisé ici le viscosimètre BROOKFIELD à 3 vitesses de rotation pour confirmer (ou non) ce comportement.

Conditions de mise en oeuvre :

- Broche : # 63
- Vitesse de rotation : 5 ; 10 ; 20 tours par minute
- Gamme complète : 24000; 12000; 6000 mPa.s
- Temps de rotation : 30 secondes
- Température de l'échantillon : 25 °C (ambiant)
- Récipient / quantité Bocal en verre / 200 mL

Répétabilité: moyenne de 3 mesures. Précision: 5%

4. Rhéologie

4.a. Mesure d'écoulement

Equipement: ANTON PAAR, rhéomètre MCR301

Caractérisation du comportement des fluides non newtoniens. L'instrument impose un champ de contrainte spécifique ou une déformation au fluide, et surveille la déformation ou la contrainte résultante.

Les résultats sont exprimés dans une courbe à échelle logarithmique de viscosité (Pa.s) en fonction du taux de cisaillement ($\gamma$).

Les résultats remarquables sont la viscosité à $\gamma$ = 10 s-1 (cisaillement équivalent de la texture mesurée avec une cuillère) et $\gamma$ = 40s-1 (cisaillement équivalent de la texture mesurée dans la bouche).

Le seuil d'écoulement représente la contrainte minimale appliquée pour mettre en mouvement un produit ou un matériau.

Il est calculé avec la modélisation de Herschel Bulkley, à partir de la courbe de contrainte en fonction du cisaillement (résultant de la courbe d'écoulement).

Géométrie: cylindres concentriques
Analyse: Oscillation
☐ Température: 20 °C (+1 min de stabilisation de la température)
☐ Durée: 10 minutes
☐ Contrainte d'oscillation: 0,1 à 1000 Pa
Répétabilité: moyenne de 3 mesures
Précision: 5%

4.b. Comportement viscoélastique G'/G"

Equipement: TA INSTRUMENTS, Rhéomètre DHR-2

Caractérisation du comportement des fluides non newtoniens. L'instrument impose un champ de contrainte spécifique ou une déformation au fluide, et surveille la déformation ou la contrainte résultante.

Les résultats sont exprimés dans un tableau avec un module d'élasticité (G ') qui caractérise la partie solide et le module visqueux (G ") qui caractérisent la partie liquide.

Les interprétations générales de l'analyse des produits alimentaires sont des "comportements de type liquide" si (G '<G ") ou" comportement de type solide "si (G'> G").

Géométrie: cylindres concentriques
Analyse: Oscillation
☐ Température: 20 °C (+1 min de stabilisation de la température)
☐ Fréquence de stress: 1 Hz
☐ Contrainte d'oscillation: 0,02 à 880 Pa
Répétabilité: moyenne de 3 mesures
Précision: 5%

**Résultats et discussions :**

1. Comportement à la cuisson

Le microscope permet une analyse qualitative du niveau de cuisson des grains d'amidons.

De façon générale, il n'y a pas de différence significative observée entre le niveau de cuisson sortie HOTMIX et après passage à l'autoclave. L'étape de pasteurisation en l'autoclave est donc considérée comme une étape de « sanitisation » et non pas de cuisson additionnelle.

Les observations microscopiques des deux amidons CLARIA®+ et NOVATION® 2300 montrent des grains d'amidons bien cuits.

L'observation microscopique du CLEARAM® CH2020 montre des grains d'amidon biens cuits, ainsi que quelques débris

L'observation microscopique de l'amidon modifié thermiquement « D » selon l'invention montre des grains d'amidons bien cuits et quelques grains crus.

Pour ce produit, comparé aux autres, on observe moins de débris et une cuisson légèrement inférieure. Il est le plus résistant des produits testés.

2. Caractérisation sensorielle

Les échantillons ont été évalués à la cuillère et classés du plus épais (le plus visqueux) au plus fluide (moins visqueux).

| Echantillons testés | Valeurs de rang pour le test à la cuillère (plus épais = 9 ; plus fluide = 1) |
|---|---|
| Amidon waxy chimiquement modifié CLEARAM® CH2020 | 8-9 |
| Amidon modifié thermiquement « D » | 8 |
| NOVATION® 2300 | 9 |
| CLARIA®₊ | 8 |
| Amidon waxy standard | 1 |

Il n'y a pas de différence significative, ce qui indique que l'amidon modifié thermiquement selon l'invention est une alternative aux produits classiquement proposés pour conférer aux amidons natifs des propriétés d'amidons chimiquement modifiés.

3. Mesure de viscosité.

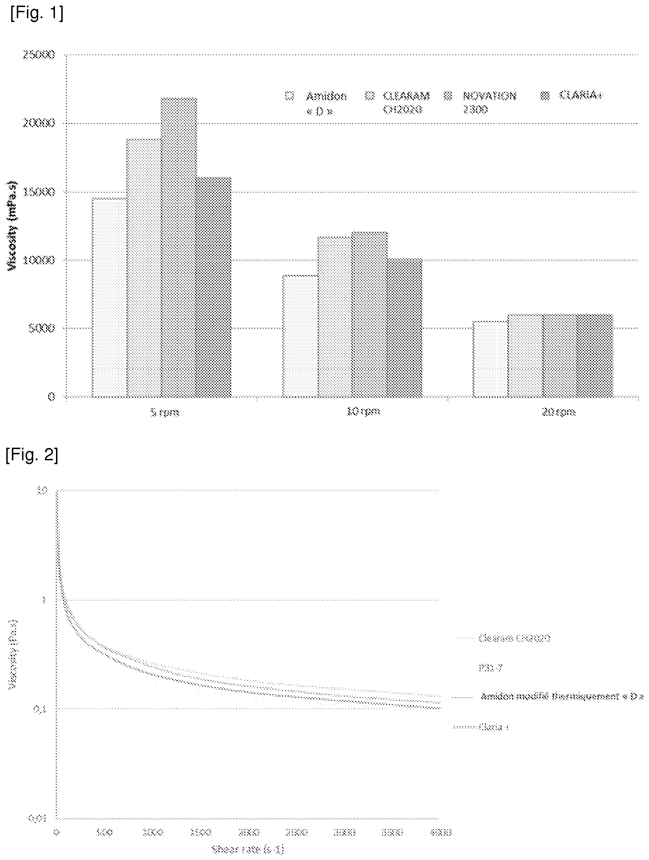

Le graphe de la figure 1 présente le profil de viscosité BROOKFIELD des 4 produits testés aux trois vitesses de rotation (5, 10 et 20 rpm).
Nous confirmons le comportement rhéofluidifiant global : plus le cisaillement est important, moins le produit est visqueux. Pour certains échantillons, à la vitesse de 10 et 20 rpm, la viscosité atteint les limites de mesure (échelle complète).
Le classement des produits (du plus épais au plus fluide), dans le tableau ci-dessous, est avec des essais mesurés à 5 rpm.

| Echantillons testés | Valeurs de rang pour la viscosité (plus épais = 8 ; plus fluide= 1) |
|---|---|
| Amidon waxy chimiquement modifié CLEARAM® CH2020 | 6-7 |
| Amidon modifié thermiquement « D » | 4 |
| NOVATION" 2300 | 8 |
| CLARIA®₊ | 5 |
| Amidon waxy standard | 1 |

Considérant toute la gamme de viscosité obtenue avec les différents essais amidons inhibés thermiquement (de 11260 à 21770 mPa-1), l'amidon modifié thermiquement « D » selon l'invention représente le produit le plus fluide et le NOVATION® 2300 représente le produit le plus épais.

4. Mesures de rhéologie

4.a. Ecoulement

Le seuil d'écoulement représente la contrainte minimale appliquée pour mettre en mouvement un produit ou un matériau.
Il est calculé avec la modélisation de Herschel Bulkley, à partir de la courbe de contrainte en fonction du cisaillement (résultant de la courbe d'écoulement) - cf. figure 2.

Les seuils d'écoulement calculés des essais de ketchup sont représentés dans le tableau ci-dessous, classés du plus épais aux plus fluides.

| Echantillons testés | Valeurs de rang pour l'écoulement (plus épais = 8 ; plus fluide = 1) |
|---|---|
| Amidon waxy chimiquement modifié CLEARAM® CH2020 | 5-6 |
| Amidon modifié thermiquement « D » | 7 |
| NOVATION® 2300 | 7 |
| CLARIA®+ | 6 |
| Amidon waxy standard | 1 |

Le comportement de l'amidon modifié thermiquement « D » selon l'invention est équivalent au NOVATION® 2300.

Sur le graphique des résultats d'écoulement, utilisé pour déterminer le seuil d'écoulement, il est choisi de considérer la viscosité à un taux de cisaillement de 10 s$^{-1}$ (cisaillement représentatif de celui appliqué avec une cuillère).

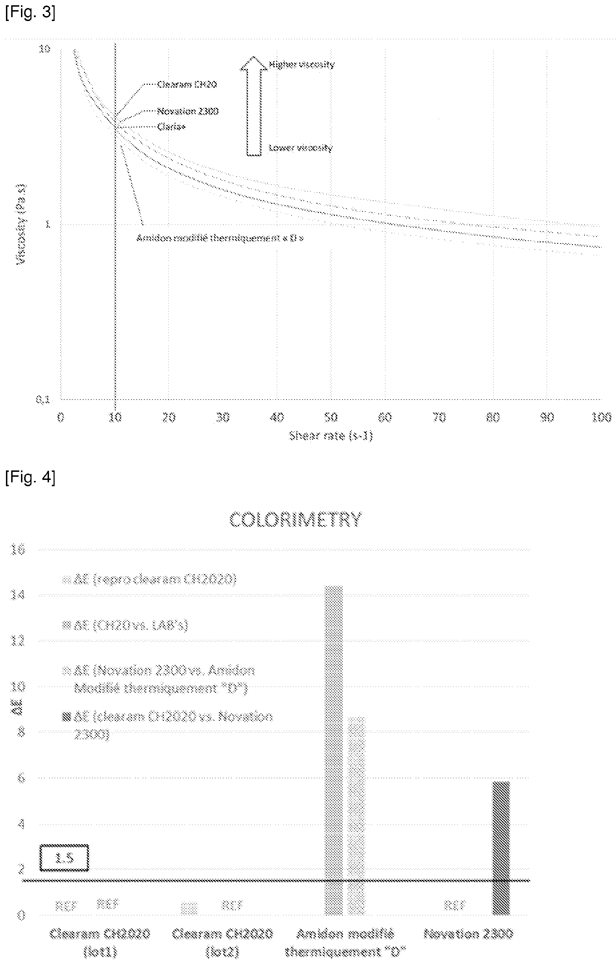

Les résultats sont présentés dans le graphe de la figure 3, repris dans le tableau ci-dessous.

| Echantillons testés | Valeurs de rang pour la viscosité à 10 s$^{-1}$ (plus épais = 9 ; plus fin = 1) |
|---|---|
| Amidon waxy chimiquement modifié CLEARAM® CH2020 | 8-9 |
| Amidon modifié thermiquement « D » | 5 |
| NOVATION® 2300 | 7 |
| CLARIA®+ | 6 |
| Amidon waxy standard | 1 |

L'amidon modifié thermiquement « D » présente une valeur de viscosité moyenne.

4.b. Comportement viscoélastique G'/G"

Pour tous les essais Ketchup, G' est dominant, preuve que le ketchup a un "comportement de type solide".

Mais ils montrent un comportement viscoélastique différent.

| Echantillons testés | Valeurs de rang pour le G' (plus épais = 9 ; plus fluide = 1) |
|---|---|
| Amidon waxy chimiquement modifié CLEARAM® CH2020 | 9 |
| Amidon modifié thermiquement « D » | 9 |
| NOVATION® 2300 | 9 |
| CLARIA®+ | 9 |
| Amidon waxy standard | 6 |

Résultats en ligne avec les résultats précédents.

**Conclusion :**

L'amidon modifié thermiquement « D » selon l'invention présente, dans l'application sauce ketchup, un comportement équivalent au témoin amidon waxy modifié chimique, et à celui de l'amidon thermiquement inhibé NOVATION® 2300.

**Exemple 7 : Mise en oeuvre des amidons thermiquement modifiés « B », « C » et « D » dans des yaourts ou laits fermentés brassés**

Recette classique de yaourt (ou lait fermenté) brassé, contenant de l'amidon pour une texture plus crémeuse.

| Ingrédients | Composition (%) |
|---|---|
| Lait entier (UHT) | 91.5 |
| Saccharose | 7.5 |
| Amidon | 1.0 |
| Ferments lactiques (YF-L811, CHR HANSEN) | Qs |
| Total | 100.0 |
| *Dosage des ferments: 20 U/100 L* | |

L'appellation yaourt ou lait fermenté ne permet pas l'incorporation d'amidon dans certains pays, on parlera dans ce cas de spécialité laitière fermentée.

| N° d'essai | Détails |
|---|---|
| 1 | NOVATIONS® 2300 (1) - société Ingrédion |
| 2 | Amidon modifié thermiquement « D » |
| 3 | Amidon modifié thermiquement « C-1 » |
| 4 | Amidon modifié thermiquement « C-2 » |
| 5 | Amidon modifié thermiquement « B-2 » |
| 6 | CLEARAM® CJ5025, amidon modifié (amidon de maïs waxy réticulé phosphate et acétylé) |

Les produits testés sont (selon les nomenclatures des exemples précédents) :

**Résultats et discussions :**

1. Caractéristiques de la fermentation:

| | pH initial à 42°C | pH final à 42°C | Durée de fermentation |
|---|---|---|---|
| **Essai 1** | 6.56 | 4.60 | 5h20 |
| **Essai 2** | 6.53 | 4.60 | 4h20 |
| **Essai 3** | 6.54 | 4.60 | 4h20 |
| **Essai 4** | 6.55 | 4.58 | 4h20 |
| **Essai 5** | 6.48 | 4.54 | 4h55 |
| **Essai 6** | 6.52 | 4.60 | 4h10 |

On observe quelques différences entre les durées de fermentation. Elles sont davantage liées à la répétabilité des essais dans des conditions laboratoire qu'aux amidons eux-mêmes.

2. Comportement à la cuisson :

L'état de cuisson de l'amidon est contrôlé au microscope optique (comme dans l'exemple 6) aux différentes étapes du process :

- à 60°C avant homogénéisation (en lumière polarisée pour visualiser les éventuels granules crus)
- après homogénéisation et pasteurisation
- après fermentation et lissage (produit fini)

Pour mieux visualiser les amidons, on utilise le colorant Lugol qui teinte les granules en bleu en cas de présence d'amylose, en marron en cas de présence d'amylopectine uniquement.

L'état de cuisson des amidons, avant homogénéisation (60°C) (lumière polarisée) ne montre pas de différence significative.

Certains amidons ont déjà commencé à gonfler à 60°C avant homogénéisation. Ceci s'explique par les différences de températures de gonflement intrinsèques à chaque amidon.

Après pasteurisation, l'état de cuisson dépend de l'amidon utilisé. Il est à noter que le lot correspondant à l'amidon modifié thermiquement « D » selon l'invention vérifie le résultat explicité à l'exemple 6. La présence de nombreux granules crus indique une meilleure résistance de ces produits au traitement thermique.

Il faut noter qu'aucun fragment de granule n'est observé, sur aucune des photos. Cela signifie que tous les granules des différents lots n'ont pas été détruits par le traitement thermique ou le cisaillement.

3. Mesures de rhéologie

La viscosité est mesurée après 1 jour, 7 jours, 15 jours et 21 jours.

Les valeurs sont données avec une incertitude de ± 5 % .

| | | Viscosité (Pa.s) | | | | |
|---|---|---|---|---|---|---|
| | | 5s-1 | 10s-1 | 40s-1 | 100s-1 | 350s-1 |
| **Essai 1** | Jour+1 | 2,6 | 1,53 | 0,509 | 0,233 | 0,082 |
| | Jour +7 | 3,45 | 1,93 | 0,581 | 0,259 | 0,089 |
| | Jour +15 | 4,23 | 2,37 | 0,718 | 0,312 | 0,1 |
| | Jour +21 | 3,78 | 2,13 | 0,615 | 0,272 | 0,097 |
| **Essai 2** | Jour+1 | 3,26 | 1,82 | 0,548 | 0,247 | 0,0899 |
| | Jour +7 | 3,64 | 2,03 | 0,602 | 0,267 | 0,095 |
| | Jour +15 | 3,46 | 1,98 | 0,58 | 0,254 | 0,092 |
| | Jour +21 | 4,09 | 2,37 | 0,671 | 0,289 | 0,1 |
| **Essai 3** | Jour+1 | 3,64 | 1,97 | 0,585 | 0,269 | 0,0991 |
| | Jour +7 | 3,4 | 1,88 | 0,555 | 0,252 | 0,093 |
| | Jour +15 | 3 | 1,71 | 0,514 | 0,23 | 0,087 |
| | Jour +21 | 3,9 | 2,12 | 0,607 | 0,273 | 0,103 |
| **Essai 4** | Jour+1 | 3,34 | 1,88 | 0,541 | 0,235 | 0,0886 |
| | Jour +7 | 3,57 | 2 | 0,576 | 0,249 | 0,093 |
| | Jour +15 | 3,37 | 1,91 | 0,554 | 0,237 | 0,089 |
| | Jour +21 | 3,56 | 2,03 | 0,578 | 0,246 | 0,093 |
| **Essai 5** | Jour+1 | 3,64 | 1,99 | 0,588 | 0,258 | 0,089 |
| | Jour +7 | 3,32 | 1,84 | 0,557 | 0,248 | 0,093 |
| | Jour +15 | 4,09 | 2,2 | 0,633 | 0,269 | 0,09 |
| | Jour +21 | 3,52 | 2,01 | 0,584 | 0,251 | 0,093 |

(suite)

| | | Viscosité (Pa.s) | | | | |
|---|---|---|---|---|---|---|
| | | 5s-1 | 10s-1 | 40s-1 | 100s-1 | 350s-1 |
| **Essai 6** | Jour+1 | 2,91 | 1,83 | 0,521 | 0,201 | 0,071 |
| | Jour +7 | 2,82 | 1,85 | 0,535 | 0,206 | 0,072 |
| | Jour +15 | 3,38 | 2,11 | 0,587 | 0,22 | 0,074 |
| | Jour +21 | 2,95 | 1,99 | 0,596 | 0,227 | 0,078 |

**Surface d'hysteresis (Pa)**

| | Jour+1 | Jour +7 | Jour +15 | Jour +21 |
|---|---|---|---|---|
| **Essai 1** | 3222 | 3420 | 4322 | 3206 |
| **Essai 2** | 3139 | 3252 | 3078 | 3546 |
| **Essai 3** | 3065 | 2899 | 2591 | 2919 |
| **Essai 4** | 2970 | 2978 | 2815 | 2818 |
| **Essai 5** | 3183 | 2450 | 3333 | 2597 |
| **Essai 6** | 3045 | 2993 | 3406 | 3220 |

On observe qu'après 1 jour, les essais les moins visqueux sont ceux à base de NOVATION® 2300 et de CLEARAM® CJ5025.

Cependant, les différences de viscosité restent faibles, et ne sont pas constantes au cours du stockage.

4. Caractérisation sensorielle

Le panel est constitué de 29 personnes parmi le personnel Roquette. Lors de la dégustation des produits, 11 puis 13 personnes ont participé aux 2 différentes sessions.

Le panel est qualifié pour la dégustation de produits formulés. Le groupe a été formé pour vérifier ses performances en termes de :

- Capacité à discriminer les produits
- Consensus, utilisation correcte des descripteurs
- Répétabilité, capacité à identifier un doublon

*Conditions de dégustation:*

L'analyse sensorielle a lieu dans un laboratoire dédié, avec des boxes individuels, un environnement calme et sans odeur (pour faciliter la concentration), des lumières blanches.

La dégustation est faite à l'aveugle avec un code à 3 chiffres, et les produits sont présentés dans un ordre aléatoire, pour éviter les effets de persistance.

Par ailleurs, la dégustation des essais s'est faite en 2 séries, pour éviter la saturation lors de la séance :

- Série 1 : NOVATION® 2300, amidon modifié thermiquement « D », amidon modifié thermiquement « C-1 », amidon modifié thermiquement « C-2 »
- Série 2 : NOVATION® 2300, amidon modifié thermiquement « B-2 », CLEARAM® CJ5025

*Méthode: profil flash (JM Siefermann, 2000)*

L'analyse des résultats est faite par Analyse Factorielle Multiple (J. Pagès, 1994), et montre que :
Sur la série 1 :

- Les trois descripteurs "brillant", "goût lactique" et "astringent" ne sont pas discriminants sur cette série de produits.

Les yaourts formulés avec les amidons modifiés thermiquement « C-1 » et « C-2 » sont similaires, ils sont plus crémeux, plus sucrés, plus gras et plus granuleux que les autres produits. L'amidon thermiquement modifié « C-1 » donne cependant un produit plus fondant, moins acide et moins épais que l'amidon thermiquement modifié « C-2 ».
L'amidon thermiquement modifié « D » est aussi peu acide que l'amidon thermiquement modifié « C-1 ».
Sur la série 2 :

- Les 5 descripteurs "brillant", "sucré", "fondant", "goût lactique" et "astringent" ne sont pas discriminants sur cette série.

Par contre, les panélistes ont établi les différences suivantes :

o L'amidon thermiquement modifié « B » est très épais, granuleux, acide, avec une texture crémeuse et du nappant,
o Le NOVATION® 2300 présente un profil sensoriel similaire mais moins acide, moins granuleux,
o Le CLEARAM® CJ5025 est le produit le moins granuleux, le moins épais et le moins gras.
On peut rapprocher ce résultat avec les observations microscopiques des granules : les granules de CLEARAM® CJ5025 n'étaient pas très gonflés, il apporte donc moins de viscosité que les autres.

Les conclusions de cette étude sont que tous les amidons testés semblent avoir résisté au procédé utilisé ici, car aucun fragment d'amidon n'a été observé.
Les amidons selon l'invention présentent pour certains des caractéristiques proches de celles du produit déjà existant : ainsi l'amidon thermiquement modifié « D » ne se distingue que par une acidité du yaourt un peu plus importante
De même, l'amidon thermiquement modifié « C-1 » conduit à des produits proches du produit existant.
L'amidon thermiquement modifié « C-2 » permet même d'atteindre des niveaux de crémeux perçu supérieurs. Il pourrait donc être utilisé à une dose inférieure pour un même résultat.

**Exemple 8 : Mise en oeuvre d'un amidon thermiquement modifié « D » dans de la sauce tomate** - *Boloanaise sans viande*

*La recette de base mise en oeuvre est la suivante :*

| Ingrédients | |
|---|---|
| Pulpe de tomate | |
| Eau | 28,2 |
| Concentré de tomate 28% | 10 |
| Oignon (hachés, congelés) 6 | |
| Vinaigre 8° | 1,2 |
| Huile d'olives | 1 |
| Amidon | 2,2 |
| Sel 0,8 | |
| Poudre d'ail | 0,2 |
| Feuilles de persil (1-2,5 mm) | 0,2 |
| Feuilles d'origan (sèches) | 0,1 |
| Feuilles de thym (sèches) | 0,1 |
| *TOTAL* | *100 g* |

*Les différents amidons testés sont les suivants :*

- Amidon modifié thermiquement « D » selon l'invention (préparé selon l'exemple 4)
- CLEARAM® CH2020 commercialisé par la société Demanderesse (amidon de maïs waxy réticulé adipate acétylé)
- NOVATION® 2300 commercialisé par la société INGREDION

*Le mode opératoire de la recette est le suivant :*

**1.** Préparation des prémélanges :

    **a.** Pulpe de tomates & Oignons
    **b.** Eau & autres ingrédients liquides
    **c.** Poudres

**2.** Réaliser une purée fluide du Prémélange (Pulpe de tomates & Oignons) au Hotmix (vitesse 6 pendant 1 min). Le prémélange doit être dépourvu de particules afin de ne pas interférer lors de l'analyse rhéologique du produit.
**3.** Ajouter le prémélange (Eau & autres ingrédients liquides)
**4.** Placer à vitesse 3 pendant 1 min
**5.** Ajouter le prémélange de poudres (sous vitesse 3 pendant 1 min)
**6.** Pré-cuire (vitesse 3 / 10 min / 80 °C)
**7.** Les traitements optionnels sont les suivants :

| | |
|---|---|
| A. PASTEURISATION + STOCKAGE AU CONGELATEUR (-18 °C) + DECONGELATION<br><br>Placer 150 g dans un bocal en verre (277 ml)<br><br>Garder au bain-marie à 60 °C<br>Pasteuriser à l'autoclave en mode « eau surchauffée » avec un palier à 85 °C, 45 min en statique Stocker à -18 °C (1 nuit*)<br>Puis décongeler 4 heures à température ambiante.<br>Observation et analyse au J+1 *(\* Sauf analyse de rhéologie. Le produit est conservé 1 nuit à -18 °C avant l'analyse sensorielle. Pour l'analyse rhéologique, le produit est décongelé après 1 mois)* | **Paramétrages STERIFLOW: Statique; Z=10°C; T=90°C**<br>Phase 1: Chauffage / 85°C /0.1 bar 8 min 0.1<br>Phase 2: Etape / 85°C / bar / 45 min<br>Phase 3: Refroidissement / 45°C / 0.1 bar / 20 min<br>Phase 4: Refroidissement forcé / 0°C / 0.1 bar / 5 min |
| B. PASTEURISATION + STOCKAGE AMBIANT (20 °C)<br><br>Placer 150 g dans un bocal en verre (277 ml)<br><br>Garder au bain-marie à 60 °C<br>Pasteuriser à l'autoclave en mode « eau surchauffée » avec un palier à 85 °C, 45 min en statique<br>Stocker à 20 °C<br>Observation et analyse à J+1 | **Paramétrages STERIFLOW: Statique; Z=10°C; T=90°C**<br>Phase 1: Chauffage / 85°C / 0.1 bar 8 min 0.1<br>Phase 2: Etape / 85°C / bar / 45 min<br>Phase 3: Refoidissement / 45°C / 0.1 bar / 20 min<br>Phase 4: Refroidissement forcé / 0°C / 0.1 bar / 5 min |
| C. STÉRILISATION + STOCKAGE AMBIANT (20 °C)<br><br>Placer 150 g dans un bocal en verre (277 ml)<br><br>Garder au bain-marie à 60 °C<br><br>Pasteuriser à l'autoclave en mode « eau surchauffée » avec un palier à 120 °C, 60 min en statique Stocker à 20 °C<br>Observation et analyse à J+1 | **Paramétrages STERIFLOW: Statique; Z=10°C; T=121°C**<br>Phase 1: chauffage / 120°C / 1.7 bar / 12 min<br>Phase 2: Etape / 120°C / 1.7 bar / 60 min<br>Phase 3: Refroidissement / 45°C / 0.1 bar / : 20 min<br>Phase 4: Refroidissement forcé / 0°C / 0.1 bar / 5 min |

*Equipements pour le traitement thermique :*

∘ Autoclave,

∘ STERIFLOW rotatif bi-process Ø 900 mm - 1 panier - 1 porte

Le système de contrôle interne du STERIFLOW (MPI Expert) est utilisé pour gérer les cycles de processus. Grâce aux sondes de température placées au centre du produit (point le plus froid) l'appareil enregistre des données utiles pendant le cycle aux fins de l'étude:

- Température de Démarrage = Start T°C : pour vérifier la bonne reproductibilité du processus de production de l'échantillon
- Température Maximale = Max T°C : pour vérifier la température maximale attente au centre du produit,
- MAX $F_0$ (minutes): Cette valeur donne une information sur l'intensité du traitement thermique. Elle représente le temps d'exposition du produit à un traitement conduisant à la même réduction du nombre de microorganismes réalisé à la température de référence (c'est-à-dire 121,1 °C qui est la température de destruction du *Clostridium Botulinum*). On parle de « Valeur pasteurisatrice ou VS » dans le cas d'une pasteurisation ou « Valeur stérilisatrice ou VS » dans le cas d'une stérilisation.

Par exemple, une valeur stérilisatrice de 3 min signifie que l'expérience réalisée est équivalente à une expérience d'une durée de 3 min à une température constante égale à la température de référence (121,1 °C).

$$F_0 = \Delta T * 10 (T\text{-}121 / Z)$$

Le « MAX $F_0$ » est la somme de toutes les valeurs à travers le cycle entier, calculée avec les valeurs de Z et de température de référence (T)

*Equipements pour les mesures de colorimétrie :*

Equipement: KONICA MINOLTA, spectrophotomètre CM-5
Méthode d'analyse des couleurs: L * a * b * espace colorimétrique / ΔE: CIE 2000 Échantillon: 6 g de poudre, emballée, dans une boîte de Pétri (Konica Minolta réf 1870-712, verre, diamètre 40 mm)
Zone de mesure: Ø 30 mm, avec masque de visée Ø 35 mm
Type de mesure: réflectance; méthode: boîte de Pétri
Observateur: 10 °/ Illuminant: D65
Répétabilité: 0,004

La luminosité, L *, représente le noir le plus foncé à L * = 0, et le blanc le plus brillant à L * = 100.
Les canaux de couleur, a * et b *, représentent les vraies valeurs de gris neutres à un * = 0 et b * = 0.
La différence de couleur AE (delta E) est calculée entre la couleur d'échantillon choisie L1a1b1 et la couleur de référence L2a2b2.
Le résultat est calculé avec le calculateur en ligne www.brucelindbloom.com (section "calc" / "Color Difference Calculator"), où le résultat "CIE 2000" est utilisé. La plus petite ΔE, la couleur la plus similaire des 2 produits.
Si ΔE est > 1,5, on considère la différence de couleur perceptible par l'œil humain.

*Caractérisations sensorielles :*

Les caractérisations sensorielles sont des appréciations subjectives et des commentaires en termes de visuel et de texture (à la cuillère et / ou à la bouche).

→ Mesures de Synérèse

En fonction de la résistance de l'amidon au processus (congélation et / ou traitement thermique), une certaine synérèse (libération d'eau) peut se produire. Le produit est tamisé (maille fine) pendant 6 minutes, la quantité de phases est pesée et le résultat donné en%.

Après tamisage et pesée de synérèse, les deux phases (eau de synérèse et sauce restante) de l'échantillon sont remises dans une cuve.

Le sensoriel est évalué principalement sur la phase de sauce restante (la sauce peut être plus concentrée ou plus épaisse).

*Niveau de cuisson de l'amidon*

Le niveau de cuisson est déterminé par microscopie, comme dans l'exemple 5 ci-avant.

*Mesure de la Rhéologie*

Caractérisation du comportement des fluides non newtoniens : l'instrument impose un champ de contrainte spécifique ou une déformation au fluide, et surveille la déformation ou la contrainte résultante.

Géométrie: Cylindres concentriques CC27
Conditions d'analyse: Tous les échantillons ont été analysés pour la rhéologie 1 jour après la date de production, après stabilisation à 20 °C.
Répétabilité de toutes les analyses: moyenne de 3 mesures
Précision: 5%

→ *Viscosité en fonction de la contrainte - Mesure de fluidité*

Les résultats sont exprimés par une courbe à échelle logarithmique donnant la viscosité (Pa.s) en fonction du taux de cisaillement ($\gamma$).

Les résultats remarquables sont la viscosité à:

• $\gamma$ = 5 s$^{-1}$ (cisaillement représentatif du produit au repos)
• $\gamma$ = 10 s$^{-1}$ à 40 s$^{-1}$ (cisaillement représentatif de celui appliqué dans la bouche pendant la mastication)
• $\gamma$ = 100 s$^{-1}$ (cisaillement représentatif de celui appliqué à la cuillère)
• $\gamma$ = 350 s$^{-1}$ (cisaillement représentatif de celui appliqué dans les processus industriels - c'est-à-dire les pompes)

→Seuil d'écoulement

Le seuil d'écoulement représente la contrainte minimale appliquée pour mettre en mouvement un produit ou un matériau. Plus le résultat est bas, plus l'effort sera minimum pour le mettre en mouvement.

Il est calculé avec la modélisation de Herschel Bulkley, à partir de la courbe de contrainte en fonction du cisaillement (résultant de la courbe d'écoulement).

→ Caractérisation visco-élastique

Les résultats du comportement viscoélastique (G '/ G ") sont exprimés dans un tableau avec un module d'élasticité (G') qui caractérise la partie solide et le module visqueux (G") qui caractérisent la partie liquide.

Les interprétations générales de l'analyse des produits alimentaires sont des "comportement de type liquide" si (G '<G ") ou "comportement de type solide "si (G'> G").

**Les résultats sont les suivants :**

**1. Données de traitement thermique (valeurs de pasteurisation / valeurs de stérilisation)** - **Mesures des Start T°C / MaxT°C / Max F$_{o}$**

| Echantillon | Pasteurisation | | | Stérilisation | | |
|---|---|---|---|---|---|---|
| | Start T°C | Max T°C | Max $F_0$(VP) | Start T°C | Max T°C | Max $F_0$ (VS) |
| CH2020 | - | - | - | - | - | - |
| amidon modifié thermiquement « D ». | 57,9 | 82,6 | 5,29 | 59,8 | 117,5 | 13,422 |
| NOVATION® 2300 | 57,8 | 82,3 | 5,01 | 61,5 | 117,4 | 13,491 |

Ces résultats traduisent :

- une bonne reproductibilité de la méthode de traitement. Les températures de début sont d'environ 57-61 ° C pour tous les essais.
- Une durée suffisante de la phase d'étape (pour la pasteurisation et la stérilisation). La température maximale est proche de la température réglée.

De plus, l'amidon modifié thermiquement « D » selon l'invention présente des comportements équivalents à un amidon inhibé thermiquement classique.

## 2. Analyse colorImétrique

La différence de couleur AE (delta E) est calculée entre la couleur d'échantillon choisie L1a1b1 et la couleur de référence L2a2b2.

Il a été calculé sous 4 points de vue différents afin d'avoir la comparaison la plus complète:

- $\Delta E$ : (repro CH20) : Etude de répétabilité pour 2 lots de CLEARAM® CH2020
- $\Delta E$ de l'étude comparative entre les prototypes CLEARAM® CH2020 modifiés de référence et l'amidon modifié thermiquement « D »
- $\Delta E$ de l'étude comparative entre le NOVATION® 2300 et l'amidon modifié thermiquement « D ».
- $\Delta E$ de l'étude comparative entre le CLEARAM® CH2020 modifié de référence et le NOVATION® 2300.

Les résultats sont présentés dans la Fig. 4.

A noter que plus la valeur de $\Delta E$ est petite, plus les couleurs des 2 produits sont similaires. Si le $\Delta E > 1,5$, la différence de couleur est considérée perceptible par l'œil humain.

Seuls les résultats $\Delta E$ de l'étude de répétabilité de CLEARAM® CH2020 ($\Delta E$ (repro CH20)) sont inférieurs à 1,5.

Tous les autres résultats de $\Delta E$ sont très discriminants :

☐ La couleur de CLEARAM® CH2020 entre les lots est significativement similaire.
☐ L'amidon modifié thermiquement « D » a une couleur significativement différente du CLEARAM® CH2020.
☐ L'amidon modifié thermiquement « D » a une couleur significativement différente du NOVATION® 2300, mais moins prononcée comparativement au CLEARAM® CH2020.
☐ La couleur du CLEARAM® CH2020 est significativement différente de NOVATION® 2300, mais moins prononcée par rapport à l'amidon modifié thermiquement « D », avec une luminosité et une saturation plus faible des couleurs entre les prototypes CLEARAM CH2020 et l'amidon modifié thermiquement « D ».

## 3. Evaluation sensorielle

Pour mémoire, les produits ont subi les 3 différentes options de traitement, et ont été observés le jour + 1 à 20 ° C

| Avec le CLEARAM CH2020 | | | |
|---|---|---|---|
| Options de traitement | Pasteurisé à 85°C + congélation & décongélation | Pasteurisé à 85°C | Stérilisé à 120 °C |
| Visuel | Rouge foncé + <br><br> Brillant ++ <br> Lisse 0 (avec micor gels) <br><br> Synérèse ++ (10%) | Rouge foncé 0 <br><br> Brillant ++ <br> Lisse + <br> Synérèse 0 | Rouge foncé ++ <br> (hétérogène) <br> Brillant + <br> Lisse + <br> Synérèse 0 |
| Texture à la cuillère | Gélifié 0 <br> Epais +++ <br> Nappant + | Gélifié 0 <br> Epais ++ <br> Nappant ++ | Gélifié + <br> Epais + <br> Nappant + |
| Texture dans la bouche | Epais +++ <br> Aqueux 0 <br> Onctueux + <br> Granuleux + <br> Collant + | Epais ++ <br> Aqueux + <br> Onctueux +++ <br> Granuleux 0 <br> Collant + | Epais + <br> Aqueux + <br> Onctueux ++ <br> Granuleux 0 <br> Collant 0 |
| Avec l'amidon modifié thermiquement « D ». | | | |
| Options de traitement | Pasteurisé à 85°C + congélation & décongélation | Pasteurisé à 85°C | Stérilisé à 120°C |
| Visuel | Rouge foncé + <br><br> Brillant + <br> Lisse 0 <br><br> Synérèse + (9,4 %) | Rouge foncé 0 <br><br> Brillant + <br> Lisse ++ <br><br> Synérèse 0 | Rouge foncé ++ <br> (hétérogène) <br> Brillant + <br> Lisse + <br> Synérèse 0 |
| Texture à la cuillère | Gélifié ++ <br> Epais +++ <br> Nappant ++ | Gélifié + <br> Epais ++ <br> Nappant ++ | Gélifié + <br> Epais + <br> Nappant + |
| Texture dans la bouche | Epais +++ Epais +++ <br> Aqueux 0 <br> Onctueux ++ <br><br> Granuleux+ <br><br> Collant 0 | Epais ++ <br> Aqueux 0 <br> Onctueux ++ <br> Granuleux <br> Granulair 0 <br> Collant 0 | Epais + <br> Aqueux 0 <br> Onctueux ++ <br> Granuleux <br> Granulair 0 <br> Collant 0 |
| Avec le NOVATION® 2300 | | | |
| Options de traitement | Pasteurisé à 85°C + congélation & décongélation | Pasteurisé à 85°C | Stérilisé à 120 °C |
| Visuel | Rouge foncé ++ <br><br> Brillant 0 <br> Lisse 0 <br> Synérèse +++ (17,9 %) | Rouge foncé + <br><br> Brillant + <br> Lisse + <br> Synérèse 0 | Rouge foncé +++ <br> (hétérogène) <br> Brillant ++ <br> Lisse + <br> Synérèse 0 |
| Texture à la cuillère | Gélifié +++ <br> Epais +++ <br> Nappant 0 | Gélifié ++ <br> Epais + <br> Nappant ++ | Gélifié ++ <br> Epais ++ <br> Nappant + |

(suite)

| Avec le *NOVATION*® 2300 | | | |
|---|---|---|---|
| Options de traitement | Pasteurisé à 85°C + congélation & décongélation | Pasteurisé à 85°C | Stérilisé à 120 °C |
| Texture dans la bouche | Epais +++ Aqueux 0 Onctueux 0 Granuleux ++ Collant 0 | Epais ++ Aqueux 0 Onctueux + Granuleux 0 Collant 0 | Epais + Aqueux 0 Onctueux 0 Granuleux 0 Collant 0 |

L'échantillon pasteurisé sera pris comme référence car considéré comme le plus proche de la cible visée pour ce genre de matrice en termes de visuel, de texture.

Tous les échantillons congelés et décongelés présentent une synérèse, ainsi qu'une texture granuleuse, micro-gélifiée...

L'amidon modifié thermiquement « D » présente, comparé aux deux autres produits,

☐ moins de synérèse
☐ une texture plus nappante non collante, lors de la congélation/décongélation

Tous les produits stérilisés présentent une texture plus fluide et une coloration rouge plus sombre et hétérogène (lié à une réaction de Maillard plus importante).

### 4. Etude la rhéologie

Les histogrammes présentés par les figures suivantes présentent les moyennes des résultats de chaque essai, sous 3 paramètres: viscosité en fonction de la contrainte, seuil d'écoulement et caractéristique viscoélastique

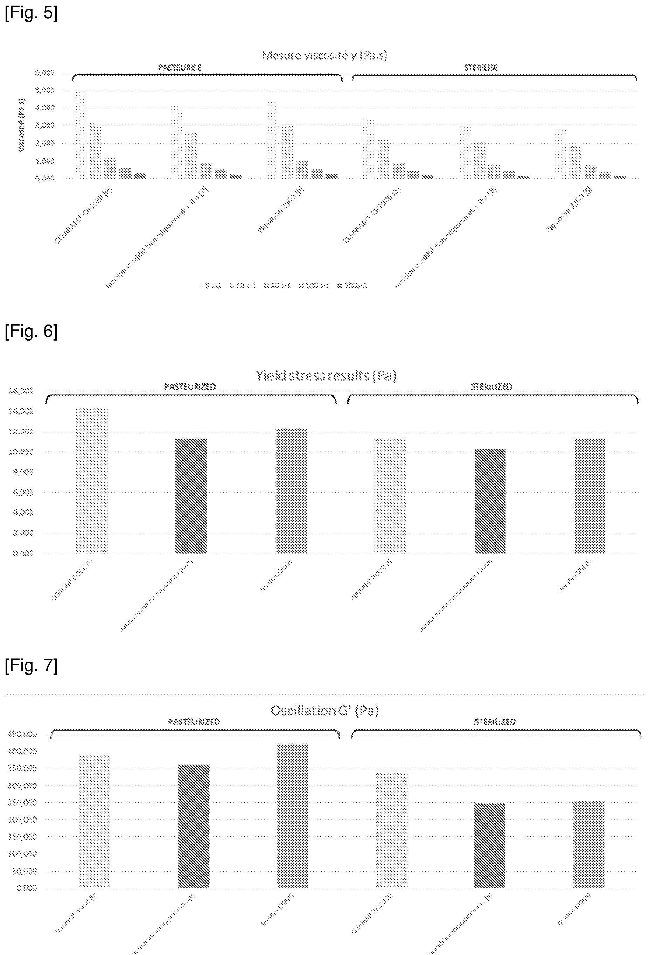

**Fig.5** : Viscosité en fonction de la contrainte

Les résultats montrent une bonne répétabilité des résultats des 3 répétitions pour chaque échantillon.

L'histogramme est une vue complète et simplifiée (moyenne de 3 répétitions). Chaque barre représente un résultat de viscosité remarquable (5; 10; 100; 350 s-1).

Tous les échantillons, pour les deux traitements thermiques, ont un comportement rhéo-fluidifiant (la viscosité diminue à mesure que le taux de cisaillement augmente).

Les échantillons stérilisés (S) sont plus fluides que leurs échantillons pasteurisés (P). Le traitement thermique a une influence sur le comportement rhéologique quel que soit l'amidon.

Pour les échantillons pasteurisés et stérilisés, le NOVATION® 2300 affiche des résultats inférieurs à la référence CLEARAM® CH2020

L'amidon thermiquement modifié « D » présente une viscosité inférieure au NOVATION® 2300, sauf dans les conditions de stérilisation où l'amidon thermiquement modifié « D » apparaît légèrement plus épais.

Le classement en groupes montre que l'amidon thermiquement modifié « D » et le NOVATION® 2300 ont des performances proches dans les conditions de pasteurisation.

**Fig. 6** : Seuil d'écoulement

Comme pour les résultats de l'analyse précédente (viscosité en fonction de la contrainte), il existe un profil similaire dans le classement des produits:
Les échantillons stérilisés (S) ont un seuil d'écoulement légèrement inférieur à celui des échantillons pasteurisés (P). Le traitement thermique a une influence sur le comportement rhéologique ; moindre résistance de l'amidon à ce fort traitement thermique.

Pour les échantillons pasteurisés, le NOVATION® 2300 affiche des résultats moyens, entre les prototypes de référence CLEARAM® CH2020 et l"amidon thermiquement modifié « D ».

L'amidon thermiquement modifié « D » apparaît comme le plus performant et le plus proche des produits de référence (CLEARAM® CH2020 et NOVATION® 2300).

**Fig. 7 :** Caractérisation viscoélastique

Pour chaque essai, G 'est dominant par rapport à G ", preuve que le produit a un" comportement de type solide ".

L'histogramme se concentre uniquement sur la valeur G '.

Comme pour les résultats de l'analyse de l'écoulement, il existe un profil similaire dans le classement des produits:
Les échantillons stérilisés (S) ont une cohésion plus faible que leurs échantillons pasteurisés (P). Le traitement thermique a une influence sur le comportement rhéologique, en endommageant l'amidon. Globalement, tous les amidons traités thermiquement sont moins résistants au traitement de stérilisation.

Pour les échantillons pasteurisés, le NOVATION® 2300 montre une cohésion assez proche du CLEARAM® CH2020.

L'amidon thermiquement modifié « D » apparaît cohérent.

Pour les échantillons stérilisés, le NOVATION® 2300 montre une cohésion plus proche de l'amidon thermiquement modifié « D ».

**Conclusion finale pour l'analyse rhéologique:**

Les conditions du procédé de stérilisation définies pour cette étude apparaissent comme un paramètre discriminant.

Cette option de traitement permet d'aller plus loin dans la discrimination des amidons propres entre eux et en comparaison avec les CLEARAM® CH2020 et NOVATION® 2300.

L'amidon thermiquement modifié « D » se classe dans la catégorie des produits de références thermiquement modifiés, tel le NOVATION® 2300.

**Exemple 9 : Mise en oeuvre des amidons thermiquement modifiés « C » dans des yaourts thermisés**

Les amidons thermiquement modifiés obtenus avec le procédé selon l'invention ont été testés dans les yaourts thermisés, également appelés yaourts ambiants ou « extended shelf-life » (à durée de conservation longue).

Ces yaourts sont soumis à un traitement thermique après fermentation, ce qui permet de les conserver à température ambiante pendant plusieurs mois.

*Les différents amidons testés sont les suivants :*

- Amidon modifié thermiquement « C » selon l'invention (préparé selon l'exemple 3);
- CLEARAM® CJ5025 commercialisé par la société Demanderesse (phosphate de di-amidon acétylé), amidon modifié classiquement utilisé dans les applications yaourts à boire stables à température ambiante - cf. https://www.roquette.com/food-and-nutrition/dairy/texturizing-solutions/ ;
- NOVATION® 2300 commercialisé par la société INGREDION.

*La recette est la suivante :*

Les amidons sont testés dans un yaourt à boire à la fraise, contenant du concentré de fruit.

| Composition en % | Recette |
| --- | --- |
| Eau | 64.1 |
| Purée de fraises concentrée (18° Brix) | 11.2 |
| Saccharose | 7.4 |
| Crème (35 % matière grasse) | 6.0 |
| Lait écrémé en poudre | 5.5 |
| Solution de pectine (3%) | 3.8 |
| Amidon | 2.0 |
| Ferments lactiques (YF-L904, CHR HANSEN) | q.s.p |

(suite)

| Composition en % | Recette |
|---|---|
| Total | 100.00 |

*Le procédé de préparation:*

- Hydratation des ingrédients (lait en poudre, sucre, pectine et amidon) dans le lait à 50°C pendant 30 minutes

- Ajout de la crème, mélange pendant 5 minutes au mélangeur Silverson (3500 rpm).

- Homogénéisation: 100 bars à 65 ou 60°C selon l'amidon utilisé

- Pasteurisation à 95°C, 7 minutes dans un échangeur à plaques à 30 un

- Addition des ferments lactiques dans le mix à 42°C (20U/200L)

- Fermentation à 42°C jusqu'à atteindre pH 4.5

- Ajout du concentré de purée de fraise

- Thermisation: préchauffage à 60°C, thermisation à 85°C pendant 30 secondes dans un échangeur à plaques à 30 L/h

- Refroidissement à 50°C

- Conditionnement et conservation à température ambiante

Caractéristiques du procédé et de la fermentation:

| | T°C homogénéisation | pH initial à 42°C | pH final à 42°C | Durée de fermentation |
|---|---|---|---|---|
| CLEARAM® CJ5025 | 65°C | 6,45 | 4,47 | 4 h |
| NOVATION® 2300 | 60°C | 6,46 | 4,50 | 4 h |
| Amidon thermiquement modifié "C". | 60°C | 6,42 | 4,50 | 4 h |

Il n'y a pas d'impact de l'amidon sur la durée de fermentation. Les trois produits atteignent le pH souhaité dans un temps équivalent.

*Aspect visuel:*

Les produits avant ajout de la purée de fraises présentent une couleur blanche légèrement beige.

Etat de cuisson de l'amidon:

L'état de cuisson de l'amidon est contrôlé à l'aide d'un microscope optique aux différentes étapes du procédé

- Après homogénéisation et premier traitement thermique (pasteurisation)
- Après le 2e traitement thermique (thermisation)

La préparation est colorée au lugol pour améliorer la visualisation des amidons.

Après pasteurisation, les granules d'amidon sont dans l'ensemble bien gonflés. Le moins gonflé est l'amidon modifié (CLEARAM® CJ5025). On n'observe pas de fragments.

*Après 2e traitement thermique*

Dans les 3 produits, on observe des granules bien gonflés. On ne visualise pas de fragments d'amidon. Les amidons ont bien résisté aux traitements thermiques.

Les granules du NOVATION® 2300 semblent en moyenne un peu moins gonflés que ceux de l'amidon thermiquement modifié "C".

Mesures rhéologiques

| | Température de mesure : 20 °C | | |
| --- | --- | --- | --- |
| Rhéomètre : | Physica MCR 301 Anton Paar | | |
| Géométrie : | CC27 | | |
| Méthode : | 0 à 350 s$^{-1}$ en 180 s et 350 s$^{-1}$ à 0 s$^{-1}$ en 180 s | | |

La viscosité est mesurée après 1 jour, 7 jours, 15 jours et 30 jours. Les valeurs sont données avec une incertitude de ± 5 %.

| | | Viscosité (Pa.s) | | | |
| --- | --- | --- | --- | --- | --- |
| | | 5s-1 | 10s-1 | 40s-1 | 100s-1 |
| CLEARAM® CJ5025 | J+1 | 2,530 | 1,530 | 0,544 | 0,297 |
| | J+7 | 2,690 | 1,630 | 0,571 | 0,309 |
| | J+15 | 1,360 | 0,871 | 0,330 | 0,187 |
| | J +30 | 1,770 | 1,080 | 0,397 | 0,223 |
| NOVATION® 2300 | J+1 | 2,910 | 1,780 | 0,612 | 0,340 |
| | J+7 | 3,570 | 2,180 | 0,736 | 0,396 |
| | J+15 | 3,600 | 2,210 | 0,744 | 0,397 |
| | J +30 | 3,320 | 2,120 | 0,708 | 0,376 |
| Amidon thermiquement modifié "C". | J+1 | 3,250 | 1,890 | 0,689 | 0,383 |
| | J+7 | 3,710 | 2,150 | 0,757 | 0,408 |
| | J+15 | 3,560 | 2,030 | 0,721 | 0,389 |
| | J +30 | 3,090 | 1,760 | 0,634 | 0,344 |

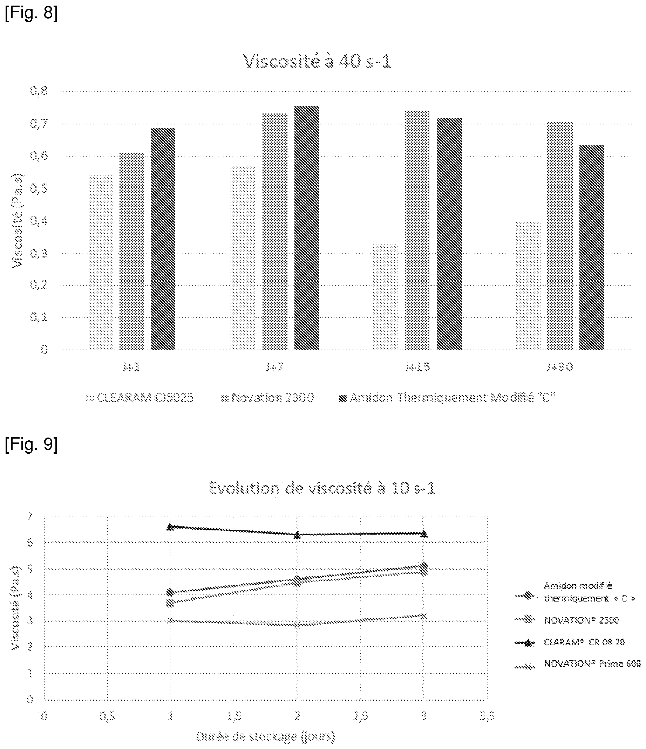

La figure 8 présente le graphe des viscosités à 40 s$^{-1}$.

Les deux essais contenant de l'amidon sans modification chimique présentent des viscosités proches.

L'essai avec le CLEARAM® CJ5025 est par contre moins visqueux à toutes les durées de conservation.

L'évolution des viscosités montre qu'il n'y a pas de rétrogradation de l'amidon dans les yaourts, puisqu'on observerait alors une augmentation de la viscosité au cours du stockage.

Capacité de rétention d'eau

On analyse la capacité de rétention d'eau dans les yaourts en réalisant le test suivant, adapté d'une méthode de Harte et Barbosa-Canovas:

- Centrifugation d'une masse W1 de yaourt pendant 30 min à 4000g et à 10°C.

- Pesée du sérum séparé suite à la centrifugation : W2
- Capacité de rétention d'eau: WHC (%) = (1- W2/ W1) x 100

|  | J+1 | J+7 | J+15 | J+30 |
|---|---|---|---|---|
| CLEARAM® CJ5025 | 76,07 | 74,31 | 72,53 | 68,97 |
| NOVATION® 2300 | 68,60 | 66,26 | 70,13 | 66,86 |
| Amidon thermiquement modifié "C". | 74,94 | 74,19 | 72,06 | 72,17 |

On constate que la capacité de rétention d'eau de l'amidon selon l'invention est proche de celle obtenue avec l'amidon modifié.

Elle est d'ailleurs stable au cours du stockage, ce qui confirme l'absence de synérèse. Par contre, l'amidon concurrent retient légèrement moins d'eau.

Dégustation des yaourts

Les 3 produits ont été évalués par des dégustateurs experts en produits laitiers. Les commentaires récoltés sont les suivants :

- CLEARAM® CJ5025 : astringent, nappant, peu acide
- NOVATION® 2300 : acide, astringent, épaisseur moyenne en bouche
- Amidon thermiquement modifié "C" : peu acide, peu astringent, doux, épais en bouche.

Cette dégustation permet de vérifier que les amidons utilisés n'apportent pas de goût parasite dans le yaourt.

Ils se distinguent par contre au niveau de l'acidité perçue, le NOVATION® 2300 étant celui qui apporte le plus d'acidité.

L'amidon thermiquement modifié "C" permettant d'obtenir un yaourt de qualité gustative plus performante.

En résumé, l'amidon thermiquement modifié selon l'invention présente donc une performance au moins équivalente à celle de l'amidon modifié ou non classiquement utilisés dans cette application, et se révèle organoleptiquement plus acceptable que le NOVATION® 2300.

**Exemple 10** : **Mise en oeuvre des amidons thermiquement modifiés « C » dans des mayonnaises allégées selon un procédé à chaud**

Les amidons thermiquement modifiés obtenus avec le procédé selon l'invention ont été testés dans les mayonnaises préparées par un procédé à chaud, mayonnaises à faible teneur en matière grasse (25 - 35 % de matières grasses).

*Les différents amidons testés sont les suivants :*

- Amidon modifié thermiquement « C » selon l'invention (préparé selon l'exemple 3);
- CLEARAM® CH2020 commercialisé par la société Demanderesse (amidon de maïs waxy réticulé adipate acétylé) ;
- NOVATION® 2300 commercialisé par la société INGREDION.

*La recette est la suivante :*

| Ingrédients | Composition en % |
|---|---|
| *Phase A (lait d'amidon)* | |
| Eau | 50,13 |
| Amidon | 4,00 |

(suite)

| Ingrédients | Composition en % |
|---|---|
| **Phase B (solution)** | |
| Moutarde | 2,50 |
| Saccharose | 6,00 |
| Jaune d'oeuf en poudre de la société LIOT | 1,20 |
| Sorbate de potassium de la société ALFA AESAR | 0,12 |
| **Phase C (dispersion)** | |
| Huile de tournesol | 25,00 |
| Gomme xanthane (F80) commercialisée par la société AGI - E415 | 0,30 |
| **Phase D (pour solution)** | |
| Vinaigre 87° | 6,50 |
| Jus de citron | 2,50 |
| | |
| Total | 100,00 |

*Le procédé de préparation :*

Adapté pour des quantités de 800 g à 2 kg, il est ici préparé un lot de 1 kg de mayonnaise allégée.

Utilisation du mélangeur Hotmix Pro Creative de 2 l (Vitesse 1E = 480 rpm ; Vitesse 3 : 800 rpm ; Vitesse 4 : 1800 rpm ; Vitesse 5 : 3000 rpm ; Vitesse 6 : 4000 rpm).

Phase A : cuire le lait d'amidon dans le bol du Hotmix (vitesse 1E, 90°C, 10 min). Laisser refroidir jusqu'à 50°C.

Phase B : préparer les ingrédients liquides (colle d'amidon et moutarde) dans le bol de l'Hotmix. Préparer les poudres dans un récipient séparé.

Bien disperser et homogénéiser ce mélange de poudre.

Préparer les phases C et D dans des récipients séparés.

*Hydratation de la Phase B*

Dans le bol du Hotmix où le lait d'amidon est maintenu à 50°C, ajouter le mélange de poudres et mélanger à Vitesse 3, 1 min.

*Emulsification + hydratation des hydrocolloïdes*

Par le haut du récipient, ajouter petit à petit la Phase C, puis la Phase D. Adapter la Vitesse de 4 à 6, selon la consistance du produit, en ne dépassant pas 3 minutes de mélange.

*Finition de l'émulsification :*

Continuer de mélanger à Vitesse 6, 1 min.

## Méthodes d'analyses

*Caractérisations sensorielles*

Les caractérisations sensorielles sont des appréciations subjectives et des commentaires en termes de visuel et de texture (à la cuillère et / ou à la bouche).

*Colorimétrie*

**Equipement : KONICA MINOLTA, spectrophotomètre CM-5**
**Méthode d'analyse des couleurs:** L * a * b * et L * C * h ° espace colorimétrique **/** $\Delta$**E** : CIE 2000
**Échantillon:** 20g, en boîte de Pétri jetable (VWR, "boîte pétri ronde PS sans ergot", plastique, diamètre 55 mm)
**Zone de mesure:** ø 30 mm, avec masque de visée ø 35 mm
**Type de mesure:** réflectance; composante spéculaire exclue (SCE)
**Observateur:** 10 ° / **Illuminant:** D65
*Répétabilité: 0,004*

La luminosité, L *, représente le noir le plus foncé à L * = 0, et le blanc le plus clair à L* = 100.
Les canaux de couleur, **a** * et **b** *, représentent les coordonnées d'une couleur. Les valeurs en * = 0 et b * = 0 représentent le vrai gris neutre.

**C** * représente la chrominance. La différence $\Delta$**C** * entre 2 échantillons montrerait une couleur (+) plus claire ou (-) plus terne. *(Peut être illustré comme la quantité de pigments)*
**h** ° représente l'angle de teinte (en degrés), qui est précisément la couleur.

Les différences d'espace colorimétrique (L * C * h D) sont plus faciles à lire et à interpréter que l'espace colorimétrique (L * a * b *).
La différence de couleur $\Delta$E (delta E) est calculée entre la couleur d'échantillon choisie L $_1$ a $_1$ b $_1$ et la couleur de référence L $_2$ a $_2$ b $_2$ (ou L $_1$ C $_1$ h $_1$ et L $_2$ C $_2$ h $_2$)
Le résultat est calculé avec le logiciel Colibri® Color de Konica, où la formule « CIE 2000 » est utilisée (la plus proche de la perception de l'œil humain).
La plus petite $\Delta$E, la couleur la plus similaire des 2 produits.
Si AE est > 1,5, on considère la différence de couleur perceptible par l'œil humain. Les analyses ont été réalisés sur les mayonnaises à 15°C.

*Niveau de cuisson de l'amidon - Microscopie Optique*

Equipement : LEICA
L'échantillon est dispersé dans de l'eau déminéralisée, puis coloré au Lugol afin de mettre en évidence les granules d'amidon. L'iode réagit avec l'amylose et forme des complexes de structure en spirale. Une couleur bleu / violet résulte si l'amidon est riche en amylose. Sinon, la couleur des granules d'amidon reste brun / jaune.
Les observations en microscopie optique fournissent différentes informations:

→ pour montrer les tailles et la dispersion des bulles d'huile. Plus l'émulsification est petite et homogène, plus l'émulsification est efficace.
→ vérifier la présence et l'apparence des granules d'amidon. Ils peuvent être présents comme non cuits ; Faible cuit ; Moyen cuit ; Bien cuit ; en tant que Fragments ; ou solubilisé (absent).
→ L'observation sous lumière polarisée révélera ou non la croix de biréfringence du granulé d'amidon non cuit (ce qui permet de contrôler la cuisson effective ou non de l'amidon).

Lumière blanche - Lentille x20 - Grossissement x150

*Rhéologie*

Caractérisation du comportement des fluides non newtoniens. L'instrument impose une contrainte spécifique ou une déformation au fluide, et surveille la déformation ou la contrainte résultante.

Conditions d'analyse : Tous les échantillons ont été analysés pour la rhéologie 1 jour après la date de production.
Répétabilité de toutes les analyses: moyenne de 3 mesures
Précision: 5%

*Ecoulement*

Les résultats d'écoulement sont exprimés dans une courbe à échelle logarithmique de viscosité (Pa.s) en fonction du taux de cisaillement ($\gamma$).

Des résultats remarquables de viscosité peuvent être notés aux taux de cisaillement suivants:

- $\gamma$ = 5 s$^{-1}$ (cisaillement équivalent de texture mesuré pour le produit au repos)
- $\gamma$ = 10 s$^{-1}$ à 40 s$^{-1}$ (cisaillement équivalent de texture mesuré pendant la mastication - *sensorielle dans la bouche* )
- $\gamma$ = 100s $^{-1}$ (cisaillement équivalent de la texture mesuré pendant l'agitation - *sensoriel à la cuillère* )
- $\gamma$ = 350s $^{-1}$ (cisaillement équivalent de la texture mesuré pendant les processus industriels - *c'est-à-dire les pompes* )

Appareil et Méthode d'analyse :

|  |  |
|---|---|
|  | Température de mesure: 15°C |
| **Rhéomètre:** | Rhéomètre TA Instrument DHR-2 |
| **Géométrie** | Cône / plaque 4cm 1° |
| **Méthode :** | 1 min de température constante<br>Rampe de 0,6 à 350 s$^{-1}$ pendant 1 min, stable à 350 s$^{-1}$ pendant 3 min, 350 à 0,6 s$^{-1}$ pendant 1 min |

*Le seuil d'écoulement*

Le seuil d'écoulement représente la contrainte minimale appliquée pour mettre en mouvement un produit ou un matériau. Plus le résultat est bas, plus l'effort sera minimum pour le mettre en mouvement.

Il est calculé avec la modélisation de Herschel Bulkley, à partir de la courbe de contrainte en fonction du cisaillement (résultant de la courbe d'écoulement).

Appareil et Méthode d'analyse :

|  |  |
|---|---|
|  | Température de mesure: 15°C |
| **Rhéomètre:** | Rhéomètre TA Instrument DHR-2 |
| **Géométrie** | Cône / plaque 4 cm 1° |
| **Méthode :** | 1 min de température constante<br>0,1 à 20 Pa pour une rampe de 8 minutes |

*Oscillation*

Les résultats du comportement viscoélastique (G '/ G ") sont exprimés dans un tableau avec un module d'élasticité (G') qui caractérise la partie solide et le module visqueux (G") qui caractérisent la partie liquide. Les interprétations générales de l'analyse des produits alimentaires sont des "comportements de type liquide" si (G '<G ") ou " comportement de type solide "si (G'> G").

Appareil et Méthode d'analyse :

|  |  |
|---|---|
|  | Température de mesure: 15 °C |
| **Rhéomètre:** | Rhéomètre TA Instrument DHR-2 |
| **Géométrie** | Cône / plaque 4cm 1 ° |

(suite)

| | Température de mesure: 15 °C |
|---|---|
| **Méthode :** | 1 min de température constante<br>0,02 à 880 Pa Contrainte d'oscillation à 1 Hz |

## Résultats

*Evaluation sensorielle (h + 12 heures)*

| ESSAIS | | CLEARAM®<br>CH2020 | Amidon thermiquement<br>modifiés « C » | NOVATION®<br>2300 |
|---|---|---|---|---|
| **Visuel** | Couleur sombre | 0 | ++ | + |
| | Brillant | 0 | 0 | 0 |
| | Lisse | 0 | 0 | 0 |
| **Texture à la cuillère** | Gélifié | 0 | 0 | 0 |
| | Épais | + | 0 | + |
| | enrobage | 0 | 0 | 0 |
| **Texture dans la bouche** | Épais | ++ | 0 | + |
| | Onctueux | 0 | 0 | 0 |
| | Granulaire | 0 | 0 | 0 |
| | Gluant | + | 0 | 0 |
| | Gras | 0 | 0 | 0 |
| **Saveur** | Hors-note | 0 | 0 | 0 |

## Commentaires :

Après la mise en oeuvre : En raison de la température à partir de 50 ° C, et du processus de cisaillement, le produit est chaud et assez fluide. Plus particulièrement pour l'amidon inhibé thermiquement et l'amidon thermiquement modifié « C » selon l'invention.

Après 12 h de maturation à + 5 ° C : Les produits sont équivalents, à l'exception d'une couleur plus foncée pour l'amidon inhibé thermiquement et l'amidon thermiquement modifié « C » selon l'invention. De plus, pour la texture à la cuillère, la mayonnaise réalisée avec l'amidon thermiquement modifié « C » apparaît un peu plus fluide.

Pour la texture dans la bouche, l'amidon inhibé thermiquement et l'amidon thermiquement modifié « C » selon l'invention ne montrent presque aucune différence, et le contrôle avec CLEARAM® CH2020 a une texture légèrement plus épaisse et collante.

Il n'y a aucun arrière-gout pour l'amidon inhibé thermiquement et l'amidon thermiquement modifié « C » selon l'invention.

L'amidon modifié CLEARAM® CH2020 est moins endommagé au cours du process. Par ailleurs, pour un dosage équivalent, l'amidon inhibé thermiquement et l'amidon thermiquement modifié « C » selon l'invention présentent des performances de viscosité moindres.

*Colorimétrie*

Valeurs telles que mesurées

| Essais | L* | a* | b * | C* | h ° |
|---|---|---|---|---|---|
| CLEARAM® CH2020 | 87,7964528 | 1 00896 | 12,2456754 | 12,2871712 | 85,2898356 |
| Amidon thermiquement modifié « C » | 84,55599502 | 1,794721 | 13,23876699 | 13,395986429 | 82,27973113 |

(suite)

| Essais | L* | a* | b * | C* | h ° |
|---|---|---|---|---|---|
| NOVATION® 2300 | 86,70282834 | 1,219061 | 12,226452297 | 12,32495981 | 84,32359511 |

Ecarts de mesure par rapport au CLEARAM® CH2020

| Essais | ΔL * | Δa * | Δb * | ΔC * | Δh * | ΔE00 (1: 1: 1) |
|---|---|---|---|---|---|---|
| Amidon thermiquement modifié « C » | -3,240458 | 0,785756 | 0,993092 | 1,072693 | -0,673032 | 2,394904478 |
| NOVATION® 2300 | -1,093625 | 0,210096 | 0,018848 | 0,037789 | -0,207528 | 0,755043034 |

Commentaires :

Comparaison à l'essai avec CLEARAM® CH2020, en standard:

ΔL *: Les deux essais avec l'amidon inhibé thermiquement et l'amidon thermiquement modifié « C » selon l'invention sont plus foncés que le CLEARAM® CH2020.
ΔC *: le NOVATION® 2300 montre une chroma très proche du CLEARAM® CH2020, tandis que l'amidon thermiquement modifié « C » selon l'invention montre plus de quantité de couleur.
Δh *: l'amidon inhibé thermiquement et l'amidon thermiquement modifié « C » selon l'invention montrent une teinte différente, mais l'amidon thermiquement modifié « C » selon l'invention est plus marqué.
ΔE: le NOVATION® 2300 montre un ΔE inférieur à 1,5, ce qui théoriquement indique une différence imperceptible de couleur en regard du CLEARAM® CH2020.

L'amidon thermiquement modifié « C » selon l'invention montre un ΔE supérieur à 1,5, de sorte que la couleur de l'échantillon est considérée comme significativement différente du CLEARAM® CH2020.

*Niveau de cuisson de l'amidon - Microscopie optique*

Il n'y a plus d'amidon granulaire dans la recette, quel que soit l'amidon utilisé, probablement en raison du processus de cuisson et du niveau de cisaillement élevé.

*Rhéologie*

| Essais | Ecoulement 15°C | | | | |
|---|---|---|---|---|---|
| | Viscosité (Pa.s) | | | | |
| | 5 s⁻¹ | 10 s⁻¹ | 40 s⁻¹ | 100 s⁻¹ | 350 s⁻¹ |
| CLEARAM® CH2020 | 11,17 | 6,72 | 2,61 | 1,44 | 0,70 |
| Amidon thermiquement modifié « C » | 8,45 | 5,08 | 1,98 | 1,08 | 0,52 |
| NOVATION® 2300 | 14,32 | 8,69 | 3,06 | 1,70 | 0,86 |

*Mesure d'écoulement*

Tous les échantillons ont un comportement rhéofluidifiant (la viscosité diminue à mesure que le taux de cisaillement augmente).

À 40 s⁻¹, représentant la sensation en bouche, la viscosité est proche entre le CLEARAM® CH 2020 et le NOVATION® 2300. L'amidon thermiquement modifié « C » est très légèrement inférieur.

La perte de viscosité par rapport au taux de cisaillement est équivalente pour les trois échantillons. L'analyse rhéologique confirme les résultats sensoriels, avec une différence mineure entre la texture des échantillons dans la bouche.

*Seuil d'écoulement*

Selon le modèle de Herschel Bulkley et avec les conditions de mesure, les échantillons n'ont montré aucune contrainte. Les échantillons sont également faciles à verser.

*Mesure d'oscillation*

Pour chaque analyse d'essai, G' est dominant par rapport à G", preuve que les produits ont un « comportement de type solide ».
La fermeté (c'est-à-dire le niveau G') est similaire pour le CLEARAM® CH 2020 et l'amidon thermiquement modifié « C ».
Le NOVATION® 2300 est légèrement moins élastique que les autres échantillons qui sont plus résistants.
Cette analyse confirme également les résultats sensoriels.

*Conclusion :*

Tous les amidons montrent la même faiblesse lorsque soumis à haute contrainte pour la mayonnaise traitée à chaud.
Tous les granules sont endommagés.
Malgré la texture fluide du produit après traitement, tous les amidons rétrogradent pendant la maturation et donnent une texture acceptable à la sauce finale.
Une texture légèrement plus épaisse est remarquée pour les essais témoins avec le CLEARAM® CH2020, mais pas très significative.
Une couleur foncée significative est notée pour la mayonnaise avec l'amidon thermiquement modifié « C ».

**Exemple 11** : **Mise en oeuvre d'un amidon thermiquement modifié « C » dans des préparations de fruits pour yaourts**

Les préparations de fruits pour yaourts contiennent souvent de l'amidon permettant d'optimiser leur viscosité et de les rendre stables pendant toute la durée de vie du produit. Elles sont mélangées à la masse blanche du yaourt dans des proportions pouvant varier entre 10 et 20% en général.

*Les différents amidons testés sont les suivants :*

- Amidon modifié thermiquement « C » selon l'invention (préparé selon l'exemple 3);
- NOVATION® 2300 et NOVATION® Prima 600 commercialisés par la société INGREDION
- CLEARAM® CR 08 20, amidon modifié chimiquement (hydroxypropyle phosphate) commercialisé par la société Demanderesse

Recette:

L'amidon a été testé dans une préparation de fruits à la fraise.

| Composition en % | Recette |
|---|---|
| | % |
| Purée de fraises | 45,0 |
| Eau | 31,0 |
| Saccharose | 20,0 |
| Amidon testé | 4,0 |
| | **100,0** |

Procédé de préparation:

- Mélanger l'eau et la purée de fraises dans un robot ménager.
- Agiter pendant 2 minutes à 800 tours/minute
- Ajouter le sucre et l'amidon
- Mélanger pendant 2 minutes à 800 rpm
- Chauffer à 90/95°C dans le robot
- Maintenir pendant 10 minutes à 90/95°C, avec une agitation de 1800 rpm
- Conditionner, refroidir et stocker à 4°C

Essais:

| 1 | Amidon modifié thermiquement « C » |
|---|---|
| 2 | Novation 2300 |
| 3 | Novation Prima 600 |
| 4 | CLEARAM® CR 08 20 |

pH des essais :

| Essais | 1 | 2 | 3 | 4 |
|---|---|---|---|---|
| pH | 1 3.55 | 3.45 1 | 3.45 | 3.50 |

Tous les essais ont un pH très acide, ce qui peut avoir une incidence sur la dégradation de l'amidon lors du process de cuisson.

Etat de cuisson de l'amidon:

L'état de cuisson de l'amidon est contrôlé à l'aide d'un microscope optique sur la préparation de fruits après cuisson.

La préparation est colorée au lugol pour améliorer la visualisation des amidons.

- Amidon modifié thermiquement « C » :
  On observe des granules bien cuits (gonflés), ainsi que des fragments de granules. Une partie des granules a donc été détruite par le procédé de fabrication.

- NOVATION® 2300 : on retrouve également un certain nombre de granules intacts, bien cuits, mais ils semblent moins nombreux. Par ailleurs, on observe de nombreux fragments.

- NOVATION® Prima 600 : il ne reste que quelques granules visibles. Il semble donc que la grande majorité des granules ait été détruite lors de la cuisson.

- CLEARAM® CR 08 20 : là encore, il ne reste que peu de granules intacts.

L'amidon modifié thermiquement selon l'invention est donc l'un des produits testés qui conserve le mieux sa structure granulaire, ce qui signifie qu'il est capable de résister aux conditions de traitement thermique et d'acidité du milieu.

Mesures de texture

Ecoulement Bostwick (20°C, 90 g de produit) après 12 jours

| Temps | Essais | | | |
|---|---|---|---|---|
| | 1 | 2 | 3 | 4 |
| 30 sec | 5.5 | 6.5 | 6.5 | 9.0 |
| 60 sec | 6.5 | 7.0 | 7.5 | 10.0 |

On constate que les comportements d'écoulement sont relativement proches entre les amidons, sauf pour l'essai avec l'amidon modifié CLEARAM® CR0820, qui s'écoule davantage.

**Viscosité**

| | Température de mesure : 20°C |
|---|---|
| Rhéomètre : | Physica MCR 301 Anton Paar |
| Géométrie : | CC27 |
| Méthode | 0 à 350 s$^{-1}$ en 180 s et 350 s$^{-1}$ à 0 s$^{-1}$ en 180 s |

La viscosité est mesurée après 1 jour, 15 jours et 30 jours.
Les valeurs sont données avec une incertitude de $\pm$ 5 %.

| Valeurs de cisaillement en s$^{-1}$ | J+1 | | | | | J+15 | | | | | J+30 | | | | |
|---|---|---|---|---|---|---|---|---|---|---|---|---|---|---|---|
| | 5 | 10 | 40 | 100 | 350 | 5 | 10 | 40 | 100 | 350 | 5 | 10 | 40 | 100 | 350 |
| Amidon modifié thermiquement « C » | 6,78 | 4,1 | 1,72 | 0,97 | 0,45 | 7,85 | 4,6 | 1,75 | 0,9 | 0,39 | 8,8 | 5,11 | 1,89 | 0,93 | 0,38 |
| NOVATION® 2300 | 5,93 | 3,7 | 1,61 | 0,92 | 0,43 | 7,34 | 4,47 | 1,84 | 1 | 0,44 | 8,31 | 4,89 | 1,87 | 0,99 | 0,43 |
| CLEARAM CR0820 | 11 | 6,6 | 3 | 1,71 | 0,7 | 9,82 | 6,29 | 2,78 | 1,58 | 0,72 | 9,97 | 6,35 | 2,78 | 1,57 | 0,71 |
| Novation Prima 600 | 4,9 | 3 | 1,3 | 0,78 | 0,38 | 4,49 | 2,84 | 1,22 | 0,7 | 0,34 | 5,17 | 3,21 | 1,31 | 0,73 | 0,35 |

Dans le graphe de la figure 9, on constate que la viscosité de la préparation de fruits contenant le CLEARAM CR0820 est la plus élevée. Elle a tendance à être stable, voire à diminuer légèrement.

L'amidon modifié thermiquement « C » donne une viscosité proche de celle obtenue avec le NOVATION® 2300, et qui augmente légèrement au cours du temps.

Enfin, le NOVATION® Prima 600 est le produit dont la viscosité est la plus faible. Elle est stable au cours du stockage.

Analyse sensorielle

Les 4 produits ont été évalués par un panel entraîné de 13 personnes. La méthode utilisée est celle du profil flash : les panélistes choisissent eux-mêmes les critères qui apparaissent comme les plus discriminants entre les échantillons, puis ils classent ceux-ci selon les critères choisis.

La conclusion de l'analyse sensorielle est la suivante :

- Par rapport à l'amidon modifié CLEARAM CR0820, l'amidon modifié thermiquement « C » donne une préparation de fruits moins épaisse (en bouche et à la cuiller), moins collante, plus fondante. Elle apparaît également moins sucrée.

- Par rapport aux amidons NOVATION® Prima 600 et NOVATION® 2300 :

  o Le NOVATION® 2300 conduit à une préparation de fruits épaisse en bouche, nappante, mais également collante et présentant un arrière-goût.
  ○ Le NOVATION® Prima 600 apporte peu de texture (bouche et cuillère) mais il permet une bonne brillance et un maintien du goût sucré.
  ○ L'amidon selon l'invention présente un caractère fondant, peu collant et peu sucré.

L'analyse sensorielle confirme donc les résultats des mesures rhéologiques, avec une texture plus épaisse pour l'amidon modifié.

En conclusion, sur l'ensemble de ces résultats, on constate que la performance de l'amidon modifié thermiquement selon l'invention se rapproche de celle d'un NOVATION® 2300.

La résistance au cisaillement en conditions acides est supérieure à celle du CLEARAM® CR0820, un amidon couramment utilisé dans les préparations de fruits. La viscosité obtenue est par contre un peu plus faible.

**Exemple 12 : préparation de fécule thermiquement modifiés à partir de fécule de pomme de terre**

1) L'alcalinisation de la fécule de pomme de terre est conduite selon les étapes suivantes :

- Préparer une suspension de fécule de pomme de terre à 36.5% de matière sèche (MS)

- Ajouter du carbonate de sodium en poudre pour obtenir une conductivité finale sur la poudre remise en suspension à 20%MS entre 0.7 et 1.1mS

- Assurer un temps de contact de 1h

- Filtrer et sécher à une humidité d'équilibre de l'amidon entre 12-18%

2) Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 30-35min, et de manière à ce que la différence de température entre la consigne et la température du produit en sortie du réacteur, qu'on appelle Delta T, soit d'une valeur de l'ordre de 19-22°C.

Paramètres de process

| Exp | Conductivité sur produit après imprégnation remis en suspension à 20%MS en mS/cm | Humidité du produit avant traitement thermique en % | Delta T | T°C consigne | Temps de séjour (min) |
|---|---|---|---|---|---|
| Base fécule de pomme de terre | 0.11 | 15.7 | 0 | 0 | 0 |
| E-1 | 0.96 | 12 | 21 | 210 | 33 |
| E-2 | 0.96 | 12 | 21 | 210 | 42 |
| E-3 | 0.96 | 12 | 22.5 | 210 | 48 |

Les mesures de viscosité RVA sont réalisées et sont présentées dans le tableau ci-dessous.

Résultats :

| Essais | RVA Pic (mPa.s) | RVA Chute (mPa.s) |
|---|---|---|
| Base fécule de pomme de terre | 877 | 554 |
| E-1 | 563 | -308 |
| E-2 | 379 | -404 |
| E-3 | 178 | -415 |

Etude comparative

Une analyse est réalisée comparant les produits selon l'invention avec des produits du commerce de même catégorie. Les produits issus de l'invention sont traités selon le selon le protocole suivant:

- Remise en suspension de la fécule à 36.5%MS
- Neutralisation par de l'acide chlorhydrique à 20% à pH 5.5 +/-1
- Filtration, lavage afin d'obtenir une conductivité inférieure à 500µS, séchage à l'humidité classique de l'amidon entre 14 et 18%

| Essais | Humidité % | pH à 20%MS | Conductivité à 20%MS (µS) | RVA Pic (mPa.s) | RVA chute (mPa.s) |
|---|---|---|---|---|---|
| E-1 | 15 | 6.2 | 67.5 | 495 | -330 |
| E-2 | 14.5 | 6.2 | 68.1 | 326 | -450 |
| E-3 | 15.5 | 6.2 | 68.5 | 242 | -412 |
| Beco Gel P4500 | 11.6 | 7.1 | 107 | 269 | -169 |
| Novation 1900 | 15.8 | 5.3 | 174 | 869 | 216 |
| D | 11 | 6.28 | 55 | 251 | -159 |

Chaque exemple E-1, E-2 et E-3 de fécules de pomme de terre thermiquement modifiées selon l'invention présente une stabilité améliorée durant le process d'utilisation par rapport à l'amidon natif : moins de phénomènes de prise en viscosité et de rétrogradation sont observés lors de l'utilisation de ces amidons. Ceci se voit par la mesure de la chute au viscosimètre RVA : plus la chute est négative plus l'amidon va être résistant aux cisaillements, à l'acidité des milieux et aux traitements thermiques.

Chaque exemple E-1, E-2 et E-3 de fécules de pomme de terre thermiquement modifiées selon l'invention peuvent être comparés à d'autres produits inhibés thermiquement de l'état de l'art base fécule de pomme de terre tel que le Novation 1900 ou le Beco Gel P4500. D'après les résultats de viscosimètre RVA les produits les plus résistants sont les produits issus de l'invention.

De même chaque exemple E-1, E-2 et E-3 de fécules de pomme de terre thermiquement modifiées selon l'invention peuvent être comparés aux exemples sur le maïs waxy et notamment la famille D : les exemple E-1, E-2 et E-3 de fécules de pomme de terre ont une viscosité plus importante au Pic à même matière sèche de mesure et présentent une résistance au process plus importante. Le choix de l'utilisation de ces amidons se fera donc en fonction de l'application visée et donc des conditions de cisaillement, d'acidité et de température de mise en oeuvre.

**Exemple 13 : préparation de fécule thermiquement modifiés de manioc**

1) L'alcalinisation de la fécule de manioc est conduite selon les étapes suivantes :

- Préparer une suspension de fécule de manioc à 36.5% de matière sèche (MS)

- Ajouter du carbonate de sodium en poudre pour obtenir une conductivité finale sur la poudre remise en suspension à 20%MS entre 0.7 et 1.1mS

- Assurer un temps de contact de 1h

- Filtrer et sécher à une humidité d'équilibre de l'amidon entre 10-15%

2) Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 20 à 35 min, et de manière à ce que la différence de température entre la consigne et la température du produit en sortie du réacteur, qu'on appelle Delta T, soit d'une valeur de l'ordre de 22-27°C.

Paramètres de process

| Essais | Conductivité sur produit après imprégnation remis en suspension à 20%MS en mS/cm | Humidité du produit avant traitement thermique en % | Delta T | T°C consigne | Temps de séjour (min) |
|---|---|---|---|---|---|
| Base fécule de manioc | 0.10 | 12.5 | 0 | 0 | 0 |
| F-1 | 0.95 | 10 | 27 | 210 | 20 |
| F-2 | 0.95 | 10 | 24 | 210 | 30 |
| F-3 | 0.95 | 10 | 25 | 210 | 35 |

Les mesures de viscosité RVA sont réalisées et sont présentées dans le tableau ci-dessous.

Résultats :

| Essais | RVA Pic (mPa.s) | RVA Chute (mPa.s) |
|---|---|---|
| Base fécule de manioc | 603 | 480 |
| F-1 | 379 | 29 |
| F-2 | 206 | -118 |

(suite)

| Essais | RVA Pic (mPa.s) | RVA Chute (mPa.s) |
|--------|-----------------|-------------------|
| F-3 | 110 | -178 |

Etude comparative

Une analyse est réalisée comparant les produits selon l'invention avec des produits du commerce de même catégorie. Les produits issus de l'invention sont traités selon le selon le protocole suivant:

- Remise en suspension de la fécule à 36.5%MS
- Neutralisation par de l'acide chlorhydrique à 20% à pH 5.5 +/-1
- Filtration, lavage afin d'obtenir une conductivité inférieure à 500$\mu$S, séchage à l'humidité classique de l'amidon entre 10 et 15%

| Essais | Humidité % | pH à 20%MS | Conductivité à 20%MS ($\mu$S) | RVA Pic (mPa.s) | RVA chute (mPa.s) |
|--------|-----------|-----------|-------------------------------|-----------------|-------------------|
| F-1 | 11 | 5.6 | 84 | 344 | -10 |
| F-2 | 10 | 5.9 | 70 | 186 | -121 |
| F-3 | 10 | 5.8 | 75 | 99 | -140 |
| CLARIA® Bliss 570 | 12.7 | 6.1 | 190 | 518 | 36 |
| D | 11 | 6.28 | 55 | 251 | -159 |

Chaque exemple F-1, F-2 et F-3 de fécules de manioc thermiquement modifiées selon l'invention présente une stabilité améliorée durant le process d'utilisation par rapport à l'amidon natif : moins de phénomènes de prise en viscosité et de rétrogradation sont observés lors de l'utilisation de ces amidons. Ceci se voit par la mesure de la chute au viscosimètre RVA : plus la chute est négative plus l'amidon va être résistant aux cisaillements, à l'acidité des milieux et aux traitements thermiques.

Chaque exemple F-1, F-2 et F-3 de fécules de manioc thermiquement modifiées selon l'invention peuvent être comparés à d'autres produits inhibés thermiquement de l'état de l'art base fécule de manioc tel que le Claria Bliss 570. D'après les résultats de viscosimètre RVA les produits les plus résistants sont les produits issus de l'invention.

De même chaque exemple F-1, F-2 et F-3 de fécules de manioc thermiquement modifiées selon l'invention peuvent être comparés aux exemples sur le maïs waxy et notamment la famille D : la famille D a une viscosité plus importante au Pic à même matière sèche de mesure et présentent une résistance au process plus importante. Le choix de l'utilisation de ces amidons se fera donc en fonction de l'application visée et donc des conditions de cisaillement, d'acidité et de température de mise en oeuvre.

**Exemple 14 : préparation d'amidons thermiquement modifiés de pois**

1) L'alcalinisation de l'amidon de pois est conduite selon les étapes suivantes :

- Préparer une suspension d'amidon de pois à 33% de matière sèche (MS)

- Ajouter du carbonate de sodium en poudre pour obtenir une conductivité finale sur la poudre remise en suspension à 20%MS entre **0.7 et 1.1mS**

- Assurer un temps de contact de 1h

- Filtrer et sécher à une humidité d'équilibre de l'amidon entre 10-15%

2) Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 10-25min, et de manière à ce que la différence de température entre la consigne et la température du produit en sortie du réacteur, qu'on appelle Delta T, soit d'une valeur de l'ordre de 21-25°C.

Paramètres de process

| Essais | Conductivité sur produit après imprégnation remis en suspension à 20%MS en mS/cm | Humidité du produit avant traitement thermique en % | Delta T | T°C consigne | Temps de séjour (min) |
|---|---|---|---|---|---|
| Base amidon de pois | 0.09 | 12.9 | 0 | 0 | 0 |
| G-1 | 0.9 | 10 | 24 | 210 | 12 |
| G-2 | 0.9 | 10 | 23.5 | 210 | 21 |

Les mesures de viscosité RVA sont réalisées et sont présentées dans le tableau ci-dessous.

Résultats :

| Essais | RVA Pic (mPa.s) | RVA Chute (mPa.s) |
|---|---|---|
| Base amidon de pois | 285 | 76 |
| G-1 | 154 | -154 |
| G-2 | 46 | -104 |

Etude comparative :

Une analyse est réalisée comparant les produits selon l'invention avec des produits du commerce de même catégorie. Les produits issus de l'invention sont traités selon le selon le protocole suivant:

- Remise en suspension de l'amidon à 36.5%MS
- Neutralisation par de l'acide chlorhydrique à 20% à pH 5.5 +/-1
- Filtration, lavage afin d'obtenir une conductivité inférieure à 500µS, séchage à l'humidité classique de l'amidon entre 14 et 18%

| Essais | Humidité % | pH à 20%MS | Conductivité à 20%MS (µS) | RVA Pic (mPa.s) | RVA chute (mPa.s) |
|---|---|---|---|---|---|
| G-1 | 10 | 6 | 20 | 170 | -154 |
| G-2 | 11.5 | 5.9 | 36 | 63 | -131 |
| D | 11 | 6.28 | 55 | 251 | -159 |

Chaque exemple G-1 et G-2 d'amidon de pois thermiquement modifiées selon l'invention présente une stabilité améliorée durant le process d'utilisation par rapport à l'amidon natif : moins de phénomènes de prise en viscosité et de rétrogradation sont observés lors de l'utilisation de ces amidons. Ceci se voit par la mesure de la chute au viscosimètre RVA : plus la chute est négative plus l'amidon va être résistant aux cisaillements, à l'acidité des milieux et aux traitements thermiques.

Chaque exemple G-1 et G-2 d'amidon de pois thermiquement modifiées selon l'invention peuvent être comparés aux exemples sur le maïs waxy et notamment la famille D : chaque exemple G-1 et G-2 a une viscosité plus faible au Pic à même matière sèche de mesure et présentent une résistance au process équivalente à la famille D. La particularité de l'amidon de pois étant l'obtention d'un produit très résistant via un temps de séjour plus court que pour les autres matières premières. Le choix de l'utilisation de ces amidons se fera donc en fonction de l'application visée et donc des conditions de cisaillement, d'acidité et de température de mise en oeuvre.

**Exemple 15 : Mise en oeuvre des amidons thermiquement modifiés « C » dans de la sauce tomate -** *Ketchup*

*L'analyse est réalisée sur la base de la recette témoin suivante :*

| Ingrédients | Quantité (%) |
|---|---|
| Eau | 45 |
| Concentré de tomate à 28 % | 26,0 |
| Amidon testé | 3,2 |
| sel | 2,0 |
| Vinaigre 8° | 8,8 |
| Saccharose | 15,0 |
| *Total* | 100 |

*Le procédé de préparation de la sauce tomate -* *Ketchup est le suivant :*

Pour un lot de 2 kg :

4. Etape de cuisson sur cuiseur Hotmix Pro Combi de 2 L :

e. Mélange de tous les ingrédients dans le bol du Hotmix
f. Cuisson 100°C, 30 minutes. Les 10 premières minutes à vitesse 3 (800 rpm) puis les 20 dernières minutes à vitesse 1E (480 rpm) en mettant le mobile de mélange (papillon) ; le mélange devenant trop visqueux.

5. Emballage / conditionnement
Remplissage de 330g dans des flacons en verre de 375 ml à une température de 60-65°C.
6. Pasteurisation
Autoclave 85°C pendant 45 minutes (équipement: STERIFLOW rotary bi-process Ø 900 mm - 1 panier - *Réf : NS 911 R MP FLW STEAM, année 2017,* www.steriflow.com/en *;* Rotation: non (statique) - traitement thermique par pasteurisation avec cascade d'eau)

Au final, la recette est caractérisée par :

- Contenu total en eau : 43 %
- pH : 3,7
- Brix : 29,5

*Les différents amidons testés sont les suivants :*

- Amidon modifié thermiquement « C-3 » selon l'invention (exemple 3)
- CLEARAM® CH2020 commercialisé par la société Demanderesse (amidon de maïs waxy réticulé adipate acétylé)
- NOVATION® 2300 commercialisé par la société INGREDION

*L'évaluation des différentes sauces tomates est réalisée par les mesures suivantes :*

### 5. Niveau de cuisson de l'amidon

Le niveau de cuisson est déterminé par microscopie optique (microscope LEICA - lentille x 20 et amplification x 150). L'échantillon est dispersé dans de l'eau déminéralisée, puis coloré au lugol dans le but de mettre en évidence les granules d'amidon. L'iode réagit avec l'amylose et forme des complexes de structure en spirale. Une couleur bleu / violet résulte si l'amidon est riche en amylose. Sinon, la couleur des granules d'amidon reste brun / jaune.
Les observations en microscopie optique fournissent différentes informations:

→ vérifier la présence et l'apparence des granules d'amidon. Ils peuvent être présents comme « non cuits » ; « Faiblement cuits » ; « Moyennement cuits » ; « Bien cuits »; « Fragmentés » ; ou « solubilisés (absents) ».

### 6. Rhéologie

Pour l'évaluation des propriétés rhéologique des sauces obtenues, plusieurs méthodes ont été employées.

### a. Mesure d'écoulement

Equipement: ANTON PAAR, rhéomètre MCR301

Caractérisation du comportement des fluides non newtoniens. L'instrument impose un champ de contrainte spécifique ou une déformation au fluide, et surveille la déformation ou la contrainte résultante. Les résultats sont exprimés dans une courbe à échelle logarithmique de viscosité (Pa.s) en fonction du taux de cisaillement ($\gamma$). Le résultat mise en lumière dans cette étude est la viscosité à $\gamma$ = 40s-1 (cisaillement équivalent de la texture mesurée dans la bouche).

Géométrie: cylindres concentriques
Analyse: Oscillation

☐ Température: 20 °C (+1 min de stabilisation de la température)
☐ Durée: 10 minutes
☐ Contrainte d'oscillation: 0,1 à 1000 Pa

Répétabilité: moyenne de 3 mesures
Précision: 5%

### b. Consistomètre Bostwick

Le Bostwick est un consistomètre. Il consiste en une cuve rectangulaire en inox séparée en deux parties par une porte-guillotine. La plus petite section sert de réservoir pour le matériel à évaluer. La plus grande section est munie de graduations de ½ cm partant de la porte et allant jusqu'à l'extrémité opposée. La porte est actionnée par un ressort. Elle est maintenue en position basse grâce à un bras de levier. Ce mécanisme assure une libération instantanée du produit. La porte glisse verticalement dans des rainures situées dans les parois latérales de la cuve rectangulaire. Le déclencheur en forme de 'L' permet de maintenir la porte en position basse. Deux vis de mise à niveau sont situées près du réservoir pour le matériau à tester et un niveau à bulle est situé à l'autre extrémité de l'appareil.
Pour cette évaluation la cuve a été remplie à sa pleine contenance. L'écoulement a été mesuré sur 30s et 40s. Une moyenne a alors été effectuée (soit à 35s), pour avoir une valeur de deux répétitions par sauce (à 20 °C).

**Résultats et discussions :**

### 5. Niveau de cuisson de l'amidon

Le microscope permet une analyse qualitative du niveau de cuisson des grains d'amidons. Les observations microscopiques du ketchup réalisé avec le NOVATION® 2300 montrent des grains d'amidons bien cuits et quelques grains moins cuits.
L'observation microscopique du ketchup avec CLEARAM® CH2020 montre des grains d'amidon biens cuits, ainsi que quelques débris.
L'observation microscopique de l'amidon modifié thermiquement « C-3 » selon l'invention montre des grains d'amidons bien cuits. La tenue des granules est proche du NOVATION® 2300. Pour ces deux amidons on observe peu de débris. Ils semblent plus résistant que le CLEARAM® CH2020 dans ces conditions.

6. Propriétés rhéologiques

a. Mesure d'écoulement

Le tableau ci-dessous reprend les résultats de mesure d'écoulement :

| Paramètres | CLEARAM® CH2020 | Amidon modifié thermiquement « C-3 » | NOVATION® 2300 |
|---|---|---|---|
| Viscosité (Pa.s) au cisaillement 40s-1 | 1,9 | 1,3 | 1,7 |

La viscosité développée par l'amidon modifié thermiquement « C3 » est légèrement inférieur à celle du CLEARAM® CH2020 et du NOVATION® 2300.

b. Consistance (Bostwick)

Le tableau ci-dessous reprend les résultats de mesure de consistance:

| Paramètres | CLEARAM® CH2020 | Amidon modifié thermiquement « C3 » | NOVATION® 2300 |
|---|---|---|---|
| Ecoulement (cm) sur 35s | 5,0 | 7,0 | 4,8 |

Le ketchup réalisé avec l'amidon modifié thermiquement « C3 » présente un écoulement plus important que les deux autres. Cela confirme les données précédentes d'écoulement.

Le ketchup réalisé avec l'amidon modifié thermiquement « C3 » est plus fluide que le ketchup réalisé avec le CLEARAM® CH2020 et le NOVATION® 2300.

**Conclusion :**

L'amidon modifié thermiquement « C3 » selon l'invention présente, dans l'application sauce ketchup, a un comportement proche des témoins : CLEARAM® CH2020 (amidon de maïs waxy réticulé adipate acétylé), et l'amidon thermiquement inhibé NOVATION® 2300 mais développe cependant moins de viscosité dans les mêmes conditions malgré un niveau de gonflement équivalent (cf. analyse microscopique).

**Revendications**

1. Procédé de production d'un amidon thermiquement modifié comprenant les étapes consistant à :

   (i) préparer un lait d'amidon présentant une matière sèche comprise entre 30 et 40 %, de préférence entre 35 et 37 % en poids,
   (ii) ajouter un agent alcalin en poudre de manière à obtenir une conductivité finale comprise entre 0,7 et 2,5 mS/cm, la conductivité finale étant mesurée après séchage et remise en suspension à 20% de matière sèche.
   (iii) assurer un temps de contact compris entre 0,5 et 5 heures,
   (iv) filtrer et sécher le lait d'amidon,
   (v) chauffer ledit amidon séché de manière à le porter à une température de plus de 180°C pendant un temps de séjour compris entre 8 et 50 minutes, de préférence entre 10 et 40 minutes, plus préférentiellement encore entre 12 et 35 minutes.

2. Procédé selon la revendication 1, **caractérisé en ce que** l'origine de l'amidon est du maïs waxy.

3. Procédé selon la revendication 1, **caractérisé en ce que** l'origine de l'amidon est choisie dans le groupe constitué de la pomme de terre, du manioc et du pois.

**4.** Procédé selon la revendication 1, **caractérisé en ce que** l'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et l'hydroxyde de potassium, pris seul ou en combinaison, et plus préférentiellement encore le carbonate de sodium.

**5.** Procédé selon la revendication 4, **caractérisé en ce que** la montée en température de l'amidon sec obtenu à l'étape (iv) est réalisée dans des dispositifs de type turboréacteurs continus, pour lesquels la température de consigne est fixée à plus de 190°C, de préférence comprise entre 195 et 240°C, et le delta T, défini comme la différence de température entre la température de consigne et la température du produit en sortie du réacteur, est compris entre 15 et 25°C.

**6.** Procédé selon la revendication 2, **caractérisé en ce que** :

- la conductivité finale du produit après séchage et remise en suspension à 20 % de matière sèche est comprise entre 1,75 et 2 mS/cm

et que les conditions de chauffage sont les suivantes :

- température de consigne, de l'ordre de 200°C,
- temps de séjour de 20 min,
- delta T, d'une valeur de 16 à 17°C.

**7.** Procédé selon la revendication 2, **caractérisé en ce que** :

- la conductivité finale du produit après séchage et remise en suspension à 20 % de matière sèche est comprise entre 1,2 et 1,32 mS/cm

et que les conditions de chauffage sont les suivantes :

- température de consigne de l'ordre de 210°C,
- temps de séjour entre 15 et 20 min,
- delta T d'une valeur de 21 à 23°C.

**8.** Procédé selon la revendication 2, **caractérisé en ce que** :

- la conductivité finale du produit après séchage et remise en suspension à 20 % de matière sèche est comprise entre 1,4 et 1,6 mS/cm

et que les conditions de chauffage sont les suivantes :

- température de consigne de l'ordre de 210°C,
- temps de séjour entre 25 et 30 min,
- delta T d'une valeur de 22°C.

**9.** Procédé selon la revendication 3, **caractérisé en ce que** :

- la conductivité finale du produit après séchage et remise en suspension à 20 % de matière sèche est de l'ordre de 1,4 mS/cm

et que les conditions de chauffage sont les suivantes :

- température de consigne, de l'ordre de 210°C,
- temps de séjour de 35 min,
- delta T d'une valeur de 22°C.

**10.** Utilisation d'un amidon modifié thermiquement produit par le procédé selon l'une quelconque des revendications précédentes, en tant qu'agent épaississant ou agent texturant dans des applications alimentaires, notamment dans les soupes, les sauces, les mayonnaises, dans les desserts comme les yaourts, les préparations de fruits pour yaourts, les laits fermentés brassés, yaourts thermisés, les crèmes dessert, les boissons, les plats préparés, les préparations à base de viande ou de poisson, tel que le surimi.

**11.** Utilisation d'un amidon modifié thermiquement produit par le procédé selon l'une ou l'autre des revendications 8 et 9, en tant qu'agent épaississant ou agent texturant dans des applications sauces, et plus particulièrement dans des sauces « ketchup ».

**12.** Utilisation d'un amidon modifié thermiquement produit par le procédé selon les revendications 7, 8 ou 9, en tant qu'agent épaississant ou agent texturant dans les desserts comme les yaourts et les laits fermentés brassés.

**13.** Utilisation d'un amidon modifié thermiquement produit par le procédé selon la revendication 9, en tant qu'agent épaississant ou agent texturant dans des applications sauces, et plus particulièrement dans des sauces tomates, de type bolognaise sans viande.

**14.** Utilisation d'un amidon modifié thermiquement produit par le procédé selon la revendication 8, en tant qu'agent épaississant ou agent texturant dans des applications yaourts thermisés et préparation de fruits pour yaourts.

**15.** Utilisation d'un amidon modifié thermiquement produit par le procédé selon la revendication 8, en tant qu'agent épaississant ou agent texturant pour la préparation de mayonnaise de faible matière grasse à chaud.

**16.** Amidon modifié thermiquement obtenu selon le procédé selon l'une quelconque des revendications 1 à 9.

**Patentansprüche**

**1.** Verfahren zur Herstellung einer thermisch modifizierten Stärke, umfassend die folgenden Schritte:

(i) Herstellen einer Stärkemilch mit einer Trockenmasse zwischen 30 und 40 Gew.-%, bevorzugt zwischen 35 und 37 Gew.-%,
(ii) Zugeben eines pulverförmigen alkalischen Mittels, so dass eine Endleitfähigkeit zwischen 0,7 und 2,5 ms/cm erreicht wird, wobei die Endleitfähigkeit nach Trocknung und Resuspendieren bei 20 % Trockenmasse gemessen wird,
(iii) Gewährleisten einer Kontaktzeit zwischen 0,5 und 5 Stunden,
(iv) Filtrieren und Trocknen der Stärkemilch,
(v) Erhitzen der getrockneten Stärke, um sie für eine Verweilzeit zwischen 8 und 50 Minuten, bevorzugt zwischen 10 und 40 Minuten, stärker bevorzugt zwischen 12 und 35 Minuten, auf eine Temperatur von mehr als 180 °C zu bringen.

**2.** Verfahren nach Anspruch 1, **dadurch gekennzeichnet, dass** der Ursprung der Stärke Waxy-Mais ist.

**3.** Verfahren nach Anspruch 1, **dadurch gekennzeichnet, dass** der Ursprung der Stärke gewählt ist aus der Gruppe, umfassend Kartoffel, Maniok und Erbse.

**4.** Verfahren nach Anspruch 1, **dadurch gekennzeichnet, dass** das alkalische Mittel bevorzugt gewählt ist aus der Gruppe, umfassend Natriumhydroxid, Natriumcarbonat, Tetranatriumpyrophosphat, Ammoniumorthophosphat, Dinatriumorthophosphat, Trinatriumphosphat, Calciumcarbonat, Calciumhydroxid, Kaliumcarbonat und Kaliumhydroxid, einzeln oder in Kombination, und stärker bevorzugt Natriumcarbonat.

**5.** Verfahren nach Anspruch 4, **dadurch gekennzeichnet, dass** der Temperaturanstieg der in Schritt (iv) erhaltenen trockenen Stärke in Vorrichtungen vom Typ kontinuierliche Turbostrahltriebwerke erzielt wird, bei denen die Solltemperatur auf über 190 °C, bevorzugt zwischen 195 und 240 °C, festgelegt wird und Delta T, welches als Temperaturdifferenz zwischen der Solltemperatur und der Temperatur des Produkts am Reaktorausgang definiert ist, zwischen 15 und 25 °C liegt.

**6.** Verfahren nach Anspruch 2, **dadurch gekennzeichnet, dass**

- die Endleitfähigkeit des Produkts nach Trocknung und Resuspendierung auf 20 % Trockensubstanz zwischen 1,75 und 2 ms/cm liegt

und die Erhitzungsbedingungen wie folgt sind:

- Solltemperatur in der Größenordnung von 200 °C,
- Verweilzeit von 20 min,
- Delta T mit einem Wert von 16 bis 17 °C.

7. Verfahren nach Anspruch 2, **dadurch gekennzeichnet, dass**:

- die Endleitfähigkeit des Produkts nach Trocknung und Resuspendierung auf 20 % Trockensubstanz zwischen 1,2 und 1,32 ms/cm liegt

und die Erhitzungsbedingungen wie folgt sind:

- Solltemperatur in der Größenordnung von 210 °C,
- Verweilzeit zwischen 15 und 20 min,
- Delta T mit einem Wert von 21 bis 23 °C.

8. Verfahren nach Anspruch 2, **dadurch gekennzeichnet, dass**:

- die Endleitfähigkeit des Produkts nach Trocknung und Resuspendierung auf 20 % Trockensubstanz zwischen 1,4 und 1,6 ms/cm liegt

und die Erhitzungsbedingungen wie folgt sind:

- Solltemperatur in der Größenordnung von 210 °C,
- Verweilzeit zwischen 25 und 30 min,
- Delta T mit einem Wert von 22°C.

9. Verfahren nach Anspruch 3, **dadurch gekennzeichnet, dass**:

- die Endleitfähigkeit des Produkts nach Trocknung und Resuspendierung auf 20 % Trockenmasse in der Größenordnung von 1,4 ms/cm liegt

und die Erhitzungsbedingungen wie folgt sind:

- Solltemperatur in der Größenordnung von 210 °C,
- Verweilzeit von 35 min,
- Delta T mit einem Wert von 22°C.

10. Verwendung einer thermisch modifizierten Stärke, die durch das Verfahren nach einem der vorhergehenden Ansprüche hergestellt wurde, als Verdickungsmittel oder Texturierungsmittel in Lebensmittelanwendungen, insbesondere in Suppen, Saucen, Mayonnaise, in Desserts wie Joghurt, Fruchtzubereitungen für Joghurt, gerührte fermentierte Milch, thermisierter Joghurt, Dessertcremes, Getränken, Fertiggerichten, Zubereitungen auf Fleisch- oder Fischbasis, wie Surimi.

11. Verwendung einer thermisch modifizierten Stärke, die durch das Verfahren nach einem der Ansprüche 8 oder 9 hergestellt wurde, als Verdickungsmittel oder Texturierungsmittel in Saucenanwendungen, insbesondere in "Ketchup"-Saucen.

12. Verwendung einer thermisch modifizierten Stärke, die durch das Verfahren nach den Ansprüchen 7, 8 oder 9 hergestellt wurde, als Verdickungsmittel oder Texturierungsmittel in Desserts wie Joghurt und gerührter fermentierter Milch.

13. Verwendung einer thermisch modifizierten Stärke, die durch das Verfahren nach Anspruch 9 hergestellt wurde, als Verdickungsmittel oder Texturierungsmittel in Saucenanwendungen, insbesondere in Tomatensaucen vom Typ fleischlose Bolognese.

**14.** Verwendung einer thermisch modifizierten Stärke, die durch das Verfahren nach Anspruch 8 hergestellt wurde, als Verdickungsmittel oder Texturierungsmittel in den Anwendungen thermisierter Joghurt und Fruchtzubereitung für Joghurt.

**15.** Verwendung einer thermisch modifizierten Stärke, die durch das Verfahren nach Anspruch 8 hergestellt wurde, als Verdickungsmittel oder Texturierungsmittel bei der Herstellung von Mayonnaise mit niedrigem Fettgehalt bei Hitze.

**16.** Thermisch modifizierte Stärke, hergestellt gemäß dem Verfahren nach einem der Ansprüche 1 bis 9.

**Claims**

**1.** A process for producing a heat-modified starch, comprising the steps consisting of:

(i) preparing a starch milk with a solids content of between 30% and 40%, preferably between 35% and 37% by weight,
(ii) adding a powdered alkaline agent so as to obtain a final conductivity comprised between 0.7 and 2.5 mS/cm, the final conductivity being measured after drying and resuspending to a solids content of 20%,
(iii) ensuring a contact time comprised between 0.5 and 5 hours,
(iv) filtering and drying the starch milk, and
(v) heating said dried starch so as to bring it to a temperature above 180°C for a residence time comprised between 8 and 50 minutes, preferably between 10 and 40 minutes, even more preferentially between 12 and 35 minutes.

**2.** The process according to claim 1, **characterized in that** the origin of the starch is waxy corn.

**3.** The process according to claim 1, **characterized in that** the origin of the starch is chosen from the group consisting of potato, cassava and pea.

**4.** The process according to claim 1, **characterized in that** the alkaline agent is preferentially chosen from the group consisting of sodium hydroxide, sodium carbonate, tetrasodium pyrophosphate, ammonium orthophosphate, disodium orthophosphate, trisodium phosphate, calcium carbonate, calcium hydroxide, potassium carbonate and potassium hydroxide, taken alone or in combination, and even more preferentially sodium carbonate.

**5.** The process according to claim 4, **characterized in that** the rise in temperature of the dry starch obtained in step (iv) is performed in devices of continuous turboreactor type, for which the nominal temperature is set above 190°C, preferably comprised between 195 and 240°C, and the delta T, defined as the difference in temperature between the nominal temperature and the temperature of the product leaving the reactor, is between 15 and 25°C.

**6.** The process according to claim 2, **characterized in that**:

- the final conductivity of the product after drying and resuspending to a solids content of 20% is comprised between 1.75 and 2 mS/cm,

and **in that** the heating conditions are as follows:

- nominal temperature of the order of 200°C,
- residence time of 20 minutes,
- delta T of a value of 16 to 17°C.

**7.** The process according to claim 2, **characterized in that**:

- the final conductivity of the product after drying and resuspending to a solids content of 20% is comprised between 1.2 and 1.32 mS/cm,

and **in that** the heating conditions are as follows:

- nominal temperature of the order of 210°C,

- residence time of between 15 and 20 minutes,
- delta T of a value of 21 to 23°C.

8. The process according to claim 2, **characterized in that**:

- the final conductivity of the product after drying and resuspending to a solids content of 20% is comprised between 1.4 and 1.6 mS/cm,

and **in that** the heating conditions are as follows:

- nominal temperature of the order of 210°C,
- residence time of between 25 and 30 minutes,
- delta T of a value of 22°C.

9. The process according to claim 3, **characterized in that**:

- the final conductivity of the product after drying and resuspending to a solids content of 20% is of the order of 1.4 mS/cm,

and **in that** the heating conditions are as follows:

- nominal temperature of the order of 210°C,
- residence time of 35 minutes,
- delta T of a value of 22°C.

10. Use of the heat-modified starch produced by the process according to any of the preceding claims, as a thickener or texturing agent in food applications, notably in soups, sauces, mayonnaises, in desserts such as yogurts, fruit preparations for yogurts, stirred fermented milks, thermized yogurts, dessert creams, drinks, ready meals, meat-based or fish-based preparations, such as surimi.

11. Use of the heat-modified starch produced by the process according to either of claims 8 or 9, as a thickener or texturing agent in sauce applications, and more particularly in "ketchup" sauces.

12. Use of the heat-modified starch produced by the process according to claims 7, 8 or 9, as a thickener or texturing agent in desserts such as yogurts and stirred fermented milks.

13. Use of the heat-modified starch produced by the process according to claim 9, as a thickener or texturing agent in sauce applications, and more particularly in tomato sauces, of meat-free bolognese type.

14. Use of the heat-modified starch produced by the process according to claim 8, as a thickener or texturing agent in thermized yogurt applications and fruit preparations for yogurts.

15. Use of the heat-modified starch produced by the process according to claims 8, as a thickener or texturing agent for the preparation at elevated temperature of low-fat mayonnaise.

16. A heat-modified starch obtained according to the process according to any of the claims 1 to 9.

[Fig. 1]

[Fig. 2]

[Fig. 3]

[Fig. 4]

[Fig. 5]

[Fig. 6]

[Fig. 7]

[Fig. 8]

Viscosité à 40 s-1

[Fig. 9]

Evolution de viscosité à 10 s-1

## RÉFÉRENCES CITÉES DANS LA DESCRIPTION

### Documents brevets cités dans la description

- US 6221420 B
- US 20010017133 A

- WO 2014042537 A